(19) **Europäisches Patentamt**
**European Patent Office**
**Office européen des brevets**

(11) **EP 4 613 720 A1**

(12) **EUROPÄISCHE PATENTANMELDUNG**

(43) Veröffentlichungstag:
**10.09.2025 Patentblatt 2025/37**

(21) Anmeldenummer: **25157887.8**

(22) Anmeldetag: **14.02.2025**

(51) Internationale Patentklassifikation (IPC):
***C03C 17/00*** (2006.01)   ***C03C 17/04*** (2006.01)

(52) Gemeinsame Patentklassifikation (CPC):
**C03C 17/002; C03C 17/007; C03C 17/008; C03C 17/04;** C03C 2217/452; C03C 2217/478; C03C 2217/48; C03C 2218/119

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **06.03.2024 DE 102024106445**

(71) Anmelder: **SCHOTT AG**
**55122 Mainz (DE)**

(72) Erfinder:
- **HOVHANNISYAN, Martun**
  **55122 Mainz (DE)**
- **KEMPKES, Christian**
  **55122 Mainz (DE)**

(74) Vertreter: **Schott Corporate IP**
**Hattenbergstraße 10**
**55122 Mainz (DE)**

(54) **SCHEIBENFÖRMIGES GLASELEMENT SOWIE PASTE UND VERFAHREN ZU DESSEN HERSTELLUNG SOWIE DESSEN VERWENDUNG UND HAUSGERÄT UMFASSEND EIN SOLCHES GLASELEMENT**

(57)    Die vorliegende Offenbarung betrifft allgemein einscheibenförmiges Glaselement mit zwei Seitenflächen und einer umlaufenden Kantenfläche, die auf beiden Seitenflächen jeweils wenigstens eine mittels Erwärmen aufgebrachte Beschichtung umfassen, ein Verfahren zu dessen Herstellung und ein Hausgerät mit dem scheibenförmigen Glaselemente. Ein weiterer Aspekt betrifft die Verwendung eines solchen Glaselements.

Fig. 2

**Beschreibung**

Gebiet der Erfindung

Die vorliegende Offenbarung betrifft allgemein das Gebiet der scheibenförmigen Glaselemente mit zwei Seitenflächen und einer umlaufenden Kantenfläche, die auf beiden Seitenflächen jeweils wenigstens eine mittels Erwärmen aufgebrachte Beschichtung umfassen, sowie eine Paste und ein Verfahren zu deren Herstellung. Ein weiterer Aspekt betrifft die Verwendung eines solchen Glaselements. Schließlich betrifft ein nochmals weiterer Aspekt ein Hausgerät, welches ein solches Glaselement umfasst.

Hintergrund der Erfindung

Scheibenförmige Glaselemente, die ein scheibenförmiges Glassubstrat sowie auf beiden Seiten des Substrats aufgebrachte Beschichtungen aufweisen, sind seit langem bekannt. Besondere Herausforderungen bestehen allerdings immer dann, wenn auf beiden Seitenflächen eines solchen Glassubstrats bzw. -elements solche Beschichtungen aufgebracht werden sollen, die mittels Erwärmen erhalten werden, im Speziellen bei glasbasierten Beschichtungen wie Emaillen. Bei diesen Beschichtungen ist es notwendig, dass eine sehr hohe Temperatur erzielt wird, die aber oberhalb der Glasübergangstemperatur ($T_g$) des Glassubstrats liegen kann bzw. sehr nahe an dieser. Die Transformationstemperatur $T_g$ allgemein ist bestimmt durch den Schnittpunkt der Tangenten an den beiden Ästen der Ausdehnungskurve bei einer Messung mit einer Heizrate von 5K/min. Dies entspricht einer Messung nach ISO 7884-8 bzw. DIN 52324. Bei dieser Temperatur ist das Glas bereits verformbar. Um Verformungen zu vermeiden, ist es daher zweckmäßig, das Erwärmen so vorzunehmen, dass das Glassubstrat dabei auf einer Unterlagsplatte liegt. Wenn eine erste Beschichtung auf diese Weise erhalten ist und auch die zweite Beschichtung mittels Erwärmen eingebrannt werden soll, liegt das Glassubstrat bzw. - element dann zumindest mit der ersten Beschichtung auf der Unterlagsplatte auf. Dabei kann die erste Beschichtung allerdings beschädigt werden. Handelt es sich beispielsweise bei der ersten Beschichtung um eine glasbasierte Beschichtung, beispielsweise eine Emaillebeschichtung, so kann es beispielsweise zum partiellen Aufschmelzen des Beschichtungsmaterials kommen, welches dann zumindest teilweise an der Unterlagsplatte anhaftet.

Die Patentschrift EP 3 169 638 B1 sieht ein Verfahren vor, bei welchem Beschichtungen auf den beiden Seitenflächen eines Substrats aus Glas oder Glaskeramik aufgebracht werden und wobei das Aufbringen der Beschichtung jeweils einen Erwärmungsschritt umfasst. Die erste aufgebrachte Beschichtung ist dabei glasbasiert ausgebildet und liegt beim Einbrand der zweiten mittels Erwärmung aufgebrachten Beschichtung auf der gegenüberliegenden Seitenfläche des Substrats auf Erhebungen der ersten Beschichtung auf. Diese Erhebungen werden durch in die erste Beschichtung integrierte Partikel erzielt, welche zu einem gewissen Teil (zwischen 10% und 70% ihres mittleren Durchmessers) aus der ersten Beschichtung herausragen.

Auf diese Weise kann zwar die Beschädigung der ersten Beschichtung beim thermischen Schritt zur Fixierung der zweiten Beschichtung zumindest minimiert, wenn nicht sogar ganz verhindert werden. Allerdings sind die auf diese Weise hergestellten Beschichtungen zum einen teilweise sehr rau und können beispielsweise Rauheiten $R_a$ im zwei-stelligen Mikrometerbereich aufweisen. Zum anderen können aus einer Beschichtung vorstehende Partikel Angriffspunkte für eine Beschädigung der Beschichtung sein, da diese einem erhöhten mechanischen Angriff beispielsweise bei Kratz- oder Abriebbelastungen ausgesetzt sind.

Es besteht daher ein Bedarf an Glaselementen, welche auf beiden Seitenflächen jeweils wenigstens eine mittels Erwärmen aufgebrachte Schicht aufweisen, bei welchen die oben genannten Schwierigkeiten adressiert sind.

Aufgabe der Erfindung

Die Aufgabe der Erfindung besteht in der Bereitstellung von Glaselementen, welche die Schwächen des Standes der Technik zumindest teilweise mindern. Weitere Aspekte der Erfindung betreffen die Bereitstellung eines Verfahrens zum Herstellen solcher Glaselemente sowie eine Paste, welche zu deren Herstellung verwendet werden kann, sowie die Verwendung eines solchen Glaselements.

Definitionen

Im Rahmen der vorliegenden Offenbarung gelten die folgenden Begriffsbestimmungen:
Unter einem Glassubstrat wird allgemein ein Formkörper aus oder umfassend Glas verstanden. Ein scheibenförmiges Glassubstrat kann entsprechend auch als Glasscheibe bezeichnet werden. Als Glaselement wird ein veredeltes Glassubstrat verstanden, also insbesondere eines, auf welchem bereits Beschichtungen und/oder allgemein sonstige Bearbeitungen der Oberfläche stattgefunden haben, wie ein Aufrauen oder Polieren. Die Seitenflächen (die auch einfach als "Seiten" bezeichnet werden können) und die umlaufende Kantenfläche des Glaselements und des Glassubstrats entsprechen dabei einander, d.h. wenn von einer Seitenfläche des Glaselements die Rede ist, entspricht diese der Seite des Glassubstrats, wobei das Glaselement dann noch zumindest bereichsweise eine Beschichtung und/oder eine sonstige Oberflächenbehandlung auf dieser Seite aufweisen kann.

Ein scheibenförmiger Formkörper ist im Rahmen der vorliegenden Offenbarung allgemein ein Formkörper, der zwei Seitenflächen, die einander gegenüberliegenden und im Rahmen üblicher Produktions- und Fehlertoleranzen zueinander vorzugsweise parallel sind, sowie eine umlaufende Kantenfläche aufweist, welche die beiden Seitenflächen miteinander verbindet. Allgemein ist die Dicke des scheibenförmigen Formkörpers dabei wenigstens eine Größenordnung kleiner als seine Länge und Breite. Ein scheibenförmiger Formkörper kann allgemein auch als Platte oder Scheibe bezeichnet werden. Länge und Breite des scheibenförmigen Formkörpers können in derselben Größenordnung liegen oder unterschiedlich sein, beispielsweise kann die Länge des scheibenförmigen Formkörpers größer sein als seine Breite. In diesem Falle könnte man den scheibenförmigen Formkörper auch als Band bezeichnen.

Unter einem Glas wird im Rahmen der vorliegenden Offenbarung allgemein ein anorganisches, nichtmetallisches und röntgenamorphes Material verstanden, welches üblicherweise durch einen Schmelzprozess aus einem Gemenge gewonnen wird und in einem Heißformgebungsprozess in die beabsichtige Form überführt wird, also im vorliegenden Fall in die einer Platte oder Scheibe oder eines Bandes. Dies kann durch übliche Heißformgebungsverfahren erfolgen, beispielsweise durch Floaten oder Ziehen.

Unter mittels Erwärmen aufgebrachten Beschichtungen werden im Rahmen der vorliegenden Offenbarung Beschichtungen verstanden, welche in einem nasschemischen Verfahren bzw. in einem sogenannten Flüssigbeschichtungsverfahren, also beispielsweise mittels Aufbringen einer Paste, auf ein Substrat aufgebracht und anschließend thermisch fixiert werden. Dabei wird zunächst als Vorläufer der eigentlichen Beschichtung eine Nassschicht erhalten, welche mittels wenigstens eines thermischen Schritts auf dem Substrat fixiert wird. Je nach der genauen Art des Materials kann vorgesehen sein, die Nassschicht nur zu trocknen; an einen Trocknungsschritt kann sich aber auch ein Schritt bei einer erhöhten Temperatur anschließen, welcher auch als "Einbrand" oder "Einbrennen" bezeichnet werden kann. Bei dieser erhöhten Temperatur kann es sich insbesondere um eine Temperatur von mehreren hundert Grad Celsius handeln, beispielsweise um Temperaturen von 600°C oder mehr. Ein Trocknungsschritt kann vorteilhaft sein, weil auf diese Weise flüssige Bestandteile des flüssigen Beschichtungsmaterials, beispielsweise einer Paste, weitgehend aus der Nassschicht entfernt werden können, wie beispielsweise Lösungsmittel und/oder sonstige Medien. Ein Trocknungsschritt ist aber nicht zwingend erforderlich, sondern es kann auch gleich ein Schritt des Erwärmens bei erhöhten Temperaturen von mehreren hundert Grad Celsius erfolgen. Auch kann vorgesehen sein, vor dem sogenannten Einbrand oder Einbrennen eine andere Art der Fixierung als ein thermisches Trocknen vorzunehmen.

Unter einer glasbasierten Beschichtung wird im Rahmen der vorliegenden Offenbarung allgemein eine Beschichtung verstanden, welche wenigstens ein $SiO_2$-haltiges Bindemittel umfasst. Eine spezielle, bevorzugte Ausführung einer glasbasierten Beschichtung kann insbesondere eine glasflussbasierte Beschichtung sein, insbesondere eine Emaillebeschichtung oder kurz Emaille. Darunter wird im Rahmen der Offenbarung eine Beschichtung umfassend einen Glasfluss oder eine Glasfritte verstanden sowie optional einen partikelbasierten Festkörper, wie beispielsweise einen Füllstoff oder ein Pigment. Unter einem Glasfluss oder synonym einer Glasfritte wird ein Stoff verstanden, welcher als Pulver aus oder umfassend Glas insbesondere einer Paste zugesetzt wird und so ausgestaltet ist, dass er beim Erwärmen aufschmilzt, das Substrat und die ggf. von der Paste/dem Beschichtungsmittel und entsprechend auch der aus der Paste bzw. dem Beschichtungsmittel resultierenden Nassschicht umfassten Partikel beispielsweise eines oder mehrere Füllstoffe und/oder eines oder mehrere Pigmente benetzt und sich mit dem Substrat verbindet, beispielsweise in Form einer sogenannten Schmelz-Reaktionszone. Die Glasfritte bzw. der Glasfluss bildet dabei eine Glasmatrix der Beschichtung, welche im Rahmen der vorliegenden Offenbarung ebenfalls als Glasfluss bzw. Glasfritte bezeichnet ist, bzw. allgemein als Bindemittel, weil diese Glasmatrix in der Regel dieselbe Zusammensetzung aufweist wie die Glasfritte/der Glasfluss (also das Bindemittel) und lediglich in der Beschichtung nicht mehr in Partikelform, sondern als zusammenhänge Matrix, vorliegt, welche die einzelnen Bestandteile der Beschichtung untereinander und mit dem Substrat verbindet. Das Substrat kann allgemein eine beliebige Zusammensetzung aufweisen; im Rahmen der vorliegenden Offenbarung handelt es sich dabei allerdings um ein Glassubstrat.

Unter einem Füllstoff wird im Rahmen der vorliegenden Offenbarung allgemein ein partikelbasierter (pulverförmiger), vorzugsweise anorganischer, Feststoff verstanden. Solche Füllstoffe werden Beschichtungsmitteln zugesetzt, um die Performance der resultierenden Beschichtung insbesondere in technischer Hinsicht zu verbessern, allgemein beispielsweise hinsichtlich der Kratzbeständigkeit und/oder der Abriebfestigkeit. Wenn im Rahmen der vorliegenden Offenbarung daher ausgeführt ist, dass eine Beschichtung einen Füllstoff umfasst, wird darunter verstanden, dass die Beschichtung Partikel umfasst, welche die Zusammensetzung des Füllstoffs aufweisen, beispielsweise die Zusammensetzung $SiO_2$. Füllstoffe sind in der Regel so ausgestaltet, dass sie, wie Pigmente, nicht mit der Beschichtungsmatrix der Beschichtung, in die sie eingebettet sind, reagieren und deren Partikel beim Einbrand weitgehend unverändert erhalten bleiben. Anders als Pigmente weisen sie aber in der Regel keine Eigenfärbung auf bzw. versehen die Beschichtung nicht mit einer bestimmten optischen Anmutung wie Farbort und/oder Effekten. Die den Füllstoff bildenden Partikel können auch einfach als "Füllstoffpartikel" bezeichnet werden.

In entsprechender Weise wird unter einem Pigment im Rahmen der vorliegenden Offenbarung ein partikelbasierter (pulverförmiger), vorzugsweise anorganischer, Feststoff verstanden, welcher einer Beschichtung eine bestimmte optische Anmutung, wie einen Farbort (weiß oder gefärbt) und/oder einen Effekt (beispielsweise einen sogenannten "Metallic-Effekt") verleiht. Entsprechend zum Füllstoff gilt auch hier, dass eine ein Pigment umfassende Beschichtung Partikel mit der Zusammensetzung des Pigments umfasst. Die das Pigment bildenden Partikel können auch einfach als "Pigmentpartikel" bezeichnet werden. Allgemein kann das Pigment auch als ein pulverförmiger Farbkörper bezeichnet werden. Im Falle der vorzugsweise anorganischen, nichtmetallischen Pigmente werden diese zuweilen als "keramische Farbkörper" bezeichnet. Unter diesem Begriff wird hier entsprechend ein anorganisches, nichtmetallisches Pigment verstanden, welches auch als "keramisches Pigment" bezeichnet werden kann. Entsprechende Pigmente können beispielsweise Metalloxide sein oder solche umfassen, beispielsweise sogenannte "Spinellpigmente" o.ä., welche dem Fachmann bekannt sind.

Allgemein weisen partikelbasierte Feststoffe, welche Bestandteile der Beschichtung nach Ausführungsformen sind oder sein können, eine Partikelgrößenverteilung auf. Sofern im Rahmen der vorliegenden Offenbarung auf die Partikelgröße abgestellt wird, handelt es sich bei dem angegeben Wert um den volumenäquivalenten Kugeldurchmesser des Partikels. Bei der durchschnittlichen Partikelgröße wird allgemein auf den $d_{50}$-Wert, bezogen auf den volumenäquivalenten Kugeldurchmesser, abgestellt.

Sofern im Rahmen der vorliegenden Offenbarung auf eine Erweichungstemperatur der Beschichtungsmatrix abgestellt wird, handelt es sich dabei um die Temperatur, bei welcher das die Beschichtungsmatrix bildende Bindemittel so plastisch ist, dass es die von der Beschichtung umfassten Partikel umhüllt und das Substrat benetzt. Im Falle eines glasbasierten Bindemittels kann es sich dabei allgemein um die sogenannte Erweichungstemperatur des Glases des entsprechenden Bindemittels handeln, also um die Erweichungstemperatur der Glasfritte/des Glasflusses. Die Erweichungstemperatur ist diejenige Temperatur, bei welcher das Glas eine Viskosität von $10^{7,6}$ dPas aufweist.

Zusammenfassung der Erfindung

Die Aufgabe der Erfindung wird gelöst durch den Gegenstand der unabhängigen Ansprüche. Spezielle und/oder bevorzugte Ausführungsformen finden sich in der Beschreibung, den Zeichnungen und/oder den unabhängigen Ansprüchen der Offenbarung.

Die Offenbarung betrifft damit allgemein ein scheibenförmiges Glaselement, umfassend ein scheibenförmiges Glassubstrat, mit zwei Seitenflächen und einer umlaufenden Kantenfläche, vorzugsweise gebildet aus oder umfassend Kalk-Natron-Glas, welches wenigstens zwei mittels Erwärmen aufgebrachte Beschichtungen aufweist, die auf den unterschiedlichen Seitenflächen des scheibenförmigen Glassubstrats angeordnet sind. Wenigstens eine Beschichtung umfasst wenigstens einen Füllstoff umfassend temperaturstabile Partikel mit einer durchschnittlichen Partikelgröße (vorzugsweise angegeben als $d_{50}$) und die eine Schichtdicke hat, wobei das Verhältnis (V) der durchschnittlichen Partikelgröße (P) zur Schichtdicke (d) der wenigstens einen Beschichtung

$$V = \frac{P}{d}$$

höchstens 1 und wenigstens 0,01 beträgt. Das Verhältnis ist dimensionslos; die Partikelgröße und die Schichtdicke werden im Rahmen der vorliegenden Offenbarung jeweils in $\mu$m angegeben.

Überraschenderweise hat sich gezeigt, dass es mit dieser Ausgestaltung der wenigstens einen Beschichtung wie vorstehend ausgeführt, also umfassend wenigstens einen Füllstoff umfassend temperaturstabile Partikel mit einer durchschnittlichen Partikelgröße (vorzugsweise angegeben als $d_{50}$), wobei das Verhältnis (V) der durchschnittlichen Partikelgröße (P) zur Schichtdicke (d) der wenigstens einen Beschichtung, V=P/d, höchstens 1 und wenigstens 0,01 beträgt, auf sehr einfache Weise möglich ist, auf beiden Seitenflächen des Glassubstrats jeweils wenigstens eine mittels Erwärmen aufgebrachte Beschichtung zu erhalten. Überraschend ist dies deswegen, weil man davon ausgegangen war, dass solche Glaselemente nur erhalten werden können, wenn wenigstens eine Beschichtung, nämlich die, welche zuerst aufgebracht wurde und auf welcher das Glaselement zumindest teilweise während des Einbrennens der zweiten, auf der zur ersten Beschichtung gegenüberliegenden Seite des Glaselements/-substrats angeordneten Beschichtung aufliegt, relativ große Partikel umfassen, welche zumindest teilweise aus der zuerst aufgebrachten Beschichtung (diese kann hier auch vereinfacht als "erste Beschichtung" bezeichnet werden) herausragen. Auf diese Weise wird nämlich die Auflagefläche der entsprechenden Beschichtung auf einer Unterlage minimiert. Da diese Partikel selbst vorzugsweise aus einem möglichst inerten Material, insbesondere vorzugsweise mit einem hohen Schmelzpunkt, ausgebildet sind, reagieren sie bei den Einbrandbedingungen nicht mit dem Material der Unterlagsplatte und Beschädigungen der ersten Beschichtung können auf diese Weise minimiert, optimalerweise sogar gänzlich vermieden werden. Zusätzlich wird auf diese Weise auch ein haptischer Effekt erzielt, was für bestimmte Anwendungen vorteilhaft sein kann.

Die Erfinder haben nun herausgefunden, dass es anders als angenommen aber auch möglich ist, einen solchen "anti-sticking"-Effekt, also einen Antihafteffekt, zu erzielen, wenn die Partikel anders als im Stand der Technik eben nicht so groß ausgebildet sind, dass sie nur teilweise, also zwischen 10 % und 70% ihres Durchmesser, in die Beschichtungsmatrix eingebettet vorliegen. Dazu wurden im Stand der Technik Partikel verwendet, welche einen Durchmesser bis 40 $\mu$m aufweisen konnten, bei Schichtdicken (bestimmt zwischen den Partikeln), welche im einstelligen Mikrometerbereich lagen. Im Gegensatz dazu sind die nach der vorliegenden Offenbarung verwendeten Partikel im Vergleich zur Schichtdicke der Beschichtung deutlich kleiner ausgebildet, was durch das Verhältnis von der durchschnittlichen Partikelgröße zur Schichtdicke der wenigstens einen Beschichtung beschrieben ist.

Obwohl also keine großen als "Abstandshalter" über die Beschichtung herausragenden Partikel in der wenigstens einen Beschichtung nach der vorliegenden Offenbarung vorliegen, zeigt sich dennoch, dass auf diese Weise ein Antihafteffekt während des Einbrennvorgangs erzielt wird.

Die Erfinder vermuten, dass dieser Antihafteffekt durch den Einsatz des wenigstens einen Füllstoffs erzielt wird, welcher zwar die Erweichungstemperatur des Bindemittels nicht direkt beeinflusst, aber die resultierende Erweichungstemperatur der aus dem Beschichtungsmaterial resultierenden Beschichtung, welche ja neben dem Bindemittel noch weitere Bestandteile, nämlich insbesondere wenigstens einen Füllstoff, umfasst. Mit anderen Worten kann offensichtlich allgemein durch die Zugabe eines geeigneten Füllstoffs die "Klebrigkeit" einer Beschichtung während eines thermischen Einbrennvorgangs reduziert werden. Die temperaturstabilen Partikel des Füllstoffs bilden damit in gewisser Weise ebenfalls eine bestimmte Struktur der Beschichtung aus, welche sich aber von der vorstehend beschriebenen, sehr rauen Struktur der Beschichtungen mit Antihaft-Effekt unterscheidet, wie ja auch weiter oben bereits diskutiert wurde.

Dafür kann es vorteilhaft sein, wenn nach einer Ausführungsform zumindest ein Teil der Füllstoffpartikel auch an der Oberfläche der wenigstens einen Beschichtung angeordnet sind. Die Partikel können dabei aus der Oberfläche der wenigstens Beschichtung herausragen; dies ist aber nicht zwingend erforderlich. Insbesondere können die Füllstoffpartikel auch gänzlich oder zumindest teilweise von der Beschichtungsmatrix umhüllt vorliegen. Eine partielle Umhüllung kann insbesondere dann vorliegen, wenn die Füllstoffpartikel an der Oberfläche angeordnet sind.

Die Ausgestaltung des Glaselements nach Ausführungsformen ist auch deshalb vorteilhaft, weil auf diese Weise niedrigere Schichtdicken realisiert werden können und/oder ein insgesamt niedrigeres sogenanntes "Peak-to-valley"-Verhältnis erzielt werden kann als bei den bekannten Glas- oder Glaskeramikelementen des Standes der Technik.

Gemäß einer Ausführungsform ist die Schichtdicke der wenigstens einen Beschichtung größer als 1 $\mu$m und vorzugsweise kleiner als 8 $\mu$m. Kleine Schichtdicken, insbesondere wenn es sich um die Dicke von Beschichtungen handelt, die glasbasiert ausgebildet sind, können vorteilhaft sein, weil auf diese Weise Beschichtungen resultieren, welche wenig anfällig gegen mechanische Belastungen sind, und gleichzeitig die Festigkeit des resultierenden Glaselements weniger beeinträchtigen als dickere Beschichtungen der gleichen Zusammensetzung. Die Schichtdicke wird im Rahmen der vorliegenden Offenbarung mittels Rasterelektronenmikroskopie bestimmt. Die Messung erfolgt dabei nach ASTM B748.1990-00. Dafür werden Querschnitte von polierten Proben angefertigt. Die rasterelektronenmikroskopischen Aufnahmen werden bei Beschleunigungsspannungen zwischen 10 kV und 20 kV und einer 2- bis 5-tausendfachen Vergrößerung erstellt. Sofern die Schicht über die Beschichtung herausragenden Partikel aufweist, welche aus der Beschichtungsmatrix herausragen, wird die Schichtdicke ohne Berücksichtigung dieser Partikel bestimmt. Zum Beispiel beträgt die Schichtdicke nach dieser Definition in einer Schicht mit einer Beschichtungsmatrix von ca. 10 $\mu$m und Füllstoff-Partikeln einer Größe von ca. 20$\mu$m, welche dann mindestens 10 $\mu$m aus der Beschichtungsmatrix herausragen, 10$\mu$m.

Als Peak-to-valley-Verhältnis oder kurz "PV" wird im Rahmen der vorliegenden Offenbarung der Höhenunterschied zwischen dem niedrigsten und dem höchsten Punkt einer Oberfläche im betrachteten Bereich verstanden. Vorteilhaft ist dieser hier nach einer Ausführungsform größer als wenigstens 2 $\mu$m. Es kann nach Ausführungsformen vorgesehen sein, dass das Peak-to-valley-verhältnis weniger als 10 $\mu$m beträgt. Allgemein ist es aber möglich, dass es nach Ausführungsformen bis 39 $\mu$m betragen kann, vorzugsweise weniger als 39 $\mu$m. Ein hohes Peak-to-valley-verhältnis von mehr als 10 $\mu$m und bis zu 39 $\mu$m, vorzugsweise weniger als 39 $\mu$m, kann insbesondere für Anwendungen vorteilhaft sein, bei welchen ein haptischer Effekt gewünscht ist, vorzugsweise bei solchen Glaselementen, bei denen die wenigstens eine Beschichtung umfassend wenigstens einen Füllstoff im Gebrauchsfall dem Benutzer zugewandt ist, also im Falle, dass die wenigstens eine Beschichtung eine Oberseiten- oder Vorderseitenbeschichtung ist.

Allgemein kann vorgesehen sein, dass die beiden Beschichtungen auf die beiden Seitenflächen des Glaselements/-substrats vollflächig oder im Wesentlichen vollflächig aufgebracht sind. Eine im Wesentlichen vollflächige Beschichtung ist eine solche, die wenigstens 95% der betreffenden Seitenfläche bedeckt. Ein vollflächiges Aufbringen einer oder beider Beschichtungen ist aber nicht zwingend erforderlich. Es kann vorgesehen sein, beide Beschichtungen lateral strukturiert in der Form aufzubringen, dass sie nur einen Teil der jeweiligen Seitenflächen von Glaselement/-substrat bedecken. Beispielsweise kann eine Beschichtung in Form eines Musters aufgebracht werden, wie eines Rasters, beispielsweise eines Punktrasters, wie es beispielsweise von Sichtscheiben bekannt ist, in Form eines die um die Kante der jeweiligen Seitenfläche verlaufen Rahmens oder in Form eines Logos. Allgemein wird also verstanden, dass das Glaselement auf beiden Seitenflächen jeweils wenigstens eine mittels Erwärmen aufgebrachte Beschichtung aufweist, wobei diese jeweils wenigstens einen Teil der entsprechenden Seitenfläche bedecken und auch ganzflächige aufgebracht sein können, aber nicht müssen. Die Beschichtungen können dabei auf der jeweiligen Seitenfläche unterschiedlich angeordnet sein; beispielsweise kann eine Beschichtung in Form eines Rahmens, die andere in Form eines Punktrasters aufgebracht sein; oder eine Beschichtung kann vollflächig, die andere aber lediglich partiell aufgebracht sein o.ä.

Um eine gute Antihaft-Eigenschaft der wenigstens einen Beschichtung zu gewährleisten, kann es vorteilhaft sein, wenn diese einen Mindestgehalt an dem wenigstens einen Füllstoff umfasst. Nach einer Ausführungsform umfasst die wenigstens eine Beschichtung wenigstens 5 Gew.-% und vorzugsweise höchstens 30 Gew.-% Füllstoff, bezogen auf den Feststoffgehalt der wenigstens einen Beschichtung, wobei für den Fall, dass die wenigstens eine Beschichtung mehr als einen Füllstoff umfasst, der Gesamtgehalt an Füllstoff betrachtet ist. Ein Gehalt von wenigstens 5 Gew.-% eines Füllstoffs ist hier vorteilhaft, um eine ausreichende Antihaft-Eigenschaft beim Einbrennen zu erzielen, wenn die wenigstens eine Beschichtung auf einer Unterlage aufliegt.

Vorteilhaft sollte der Anteil des wenigstens einen Füllstoffs in der wenigstens einen Beschichtung allerdings nicht zu hoch sein. Ein zu hoher Anteil an Füllstoff kann die Eigenschaften der resultierenden wenigstens einen Beschichtung, die einen Füllstoff umfasst, nämlich negativ beeinflussen, beispielsweise deren Haftfestigkeit. Daher beträgt nach einer Ausführungsform der Gehalt der wenigstens einen Beschichtung an dem wenigstens einen Füllstoff höchstens 30 Gew.-%.

Nach einer Ausführungsform kann vorgesehen sein, dass die wenigstens eine Beschichtung einen weiteren Füllstoff umfassend temperaturstabile Partikel umfasst, wobei die durchschnittliche Partikelgröße, vorzugsweise angegeben als $d_{50}$, des weiteren Füllstoffs, von der des wenigstens einen Füllstoffs verschieden ist und wobei vorzugsweise die durchschnittliche Partikelgröße, vorzugsweise angegeben als $d_{50}$, beider Füllstoffe höchstens 1,2 $\mu$m, bevorzugt höchstens 1,0 $\mu$m, beträgt. eine bevorzugte Untergrenze kann allgemein, ohne Beschränkung auf eine spezielle Ausführungsform, beispielsweise wenigstens 0,03 $\mu$m betragen, beispielsweise wenigstens 0,04 $\mu$m. Mit anderen Worten umfasst nach einer Ausführungsform die wenigstens eine Beschichtung wenigstens zwei Füllstoffe mit unterschiedlicher durchschnittlicher Partikelgröße. Dies kann vorteilhaft sein, um einen besonders guten Antihaft-Effekt zu erzielen. Je nach genauer Anwendung des Glaselements kann vorgesehen sein, wie vorstehend spezifiziert, dass die durchschnittliche Partikelgröße, vorzugsweise bezogen auf den $d_{50}$ des volumenäquivalenten Partikeldurchmessers, beider Füllstoffe weniger als 1,2 $\mu$m, bevorzugt höchstens 1,0 $\mu$m, beträgt. Dies ist aber nicht zwingend notwendig. Es kann beispielsweise für Anwendungen, in denen ein starker haptischer Effekt der wenigstens einen Beschichtung gewünscht ist, auch vorgesehen sein, dass ein Füllstoff bzw. die von ihnen jeweils umfassten Partikel eine Partikelgröße von mehr als 1,2 $\mu$m, bevorzugt höchstens 1,0 $\mu$m aufweisen, solange das entsprechende Verhältnis der durchschnittlichen Partikelgröße zur Schichtdicke erfüllt ist.

Im Rahmen der vorliegenden Offenbarung wird, soweit dies nicht anders ausgeführt ist, hinsichtlich des Partikeldurchmesser bzw. synonym Partikelgrößen allgemein, ohne Beschränkung auf eine spezielle Ausführungsform, vorzugsweise der volumenäquivalente Kugeldurchmesser angegeben. Weiterhin wird hinsichtlich der durchschnittlichen Partikelgröße vorzugsweise allgemein, ohne Beschränkung auf eine spezielle Ausführungsform, auf den $d_{50}$-Wert der Partikelgrößenverteilung abgestellt. Sofern ausgeführt ist, dass eine Beschichtung und/oder ein Füllstoff keine Partikel oberhalb einer bestimmten Größe aufweist, wird darunter allgemein, ohne Beschränkung auf eine spezielle Ausführungsform, vorzugsweise verstanden, dass der $d_{99}$-Wert der Partikelgrößenverteilung (oder synonym Partikeldurchmesserverteilung) höchstens so groß ist wie der angegebene Wert.

Ausführungsformen mit mehr als zwei Füllstoffen sind ebenfalls möglich.

Nach einer weiteren Ausführungsform kann vorgesehen sein, dass das scheibenförmige Glaselement thermisch vorgespannt ist bzw. vorliegt. Insbesondere kann vorgesehen sein, dass das scheibenförmige Glaselement bzw. das scheibenförmige Glassubstrat aus Kalk-Natron-Glas ausgebildet ist und das Glaselement thermisch vorgespannt vorliegt. Die Dicke des scheibenförmigen Glassubstrats kann allgemein zwischen 1 mm und 10 mm liegen, vorzugsweise zwischen 2 mm und 6 mm, beispielsweise bei 2 mm, oder 3 mm, oder 4 mm. Die Dicke des scheibenförmigen Glassubstrats und des scheibenförmigen Glaselements entsprechen sich im Wesentlichen, da die Dicke des scheibenförmigen Substrats deutlich größer ist als die der Beschichtungen, sodass im Rahmen der Messgenauigkeit die Bestimmung der Dicke für das Substrat und das Element (also umfassend die wenigstens zwei Beschichtungen) denselben Wert liefert. Unter einem thermisch vorgespannten Glaselement wird verstanden, dass eine Vorspannung gemäß EN 12150 vorliegt.

Nach einer Ausführungsform ist vorgesehen, dass der wenigstens eine Füllstoff aus $SiO_2$ ausgebildet ist oder $SiO_2$ umfasst, wobei vorzugsweise alle der von der wenigstens einen Beschichtung umfassten Füllstoffe aus $SiO_2$ ausgebildet sind oder $SiO_2$ umfassen. Es ist allerdings auch möglich und kann vorteilhaft sein, wenn der Füllstoff aus $Al_2O_3$ und/oder $ZrO_2$ ausgebildet ist oder $Al_2O_3$ und/oder $ZrO_2$ umfasst, alternativ oder zusätzlich zu $SiO_2$.

Diese vorgenannten Materialien sind vorteilhaft, weil sie bei den Einbrandtemperaturen beispielsweise glasbasierter Beschichtungen temperaturbeständig sind und dabei chemisch inert. $Al_2O_3$ und $ZrO_2$ sind dazu bekannte Hartstoffe und können die Kratz- und Abriebfestigkeit von Beschichtungen, die sie umfassen, deutlich verbessern. $SiO_2$ wiederum hat den Vorteil, dass dieses Material in unterschiedlichen Modifikationen vorliegen kann und insbesondere auch in amorpher Form erhältlich ist. Auf diese Weise können beispielsweise Partikelformen erhalten werden, die je nach Anwendung maßgeschneidert sind. Insbesondere kann es möglich sein, im Wesentlichen kugelförmige Partikel zu erhalten, also Partikel, die als kugelförmig beschrieben werden können (im Rahmen üblicher Fertigungstoleranzen). Es ist sogar möglich, auf diese Weise monomodale und/oder bimodale Partikelgrößenverteilungen einzustellen. Außerdem ist $SiO_2$ allgemein so herstellbar, dass es in unterschiedlichen Korngrößen (oder synonym Partikelgrößen) erhältlich ist. Auch die Eigenschaften der Partikel aus oder umfassend $SiO_2$ können, beispielsweise für sogenannte Kieselsäuren, gezielt eingestellt werden, sodass solche Partikel gegebenenfalls auch zur Einstellung der Eigenschaften von flüssigen Beschichtungsmitteln, welche sie umfassen, beispielsweise von Pasten, eingesetzt werden können. Daher ist nach einer Ausführungsform der Einsatz von Füllstoffen aus oder umfassend $SiO_2$ besonders bevorzugt.

Nach einer weiteren Ausführungsform weist die wenigstens eine Beschichtung eine Rauheit $R_a$ von wenigstens 0,1 $\mu$m und höchstens 2,5 $\mu$m auf. Nach einer weiteren Ausführungsform weist die Beschichtung eine Rauheit $S_a$ von wenigstens 0,1 $\mu$m und höchstens 2,5 $\mu$m auf. Bei der Rauheit $R_a$ handelt es sich um den sogenannten Mittenrauwert, welcher die mittlere Abweichung eines Messpunkt von einer Mittellinie angibt. Der Wert von $R_a$ wird entlang einer Linie bestimmt. Bei der Rauheit $S_a$ erfolgt die Bestimmung der Rauheit analog als mittlere Abweichung zu einem mittleren Wert, wobei die Bestimmung der Rauheit allerdings nicht entlang einer Linie, sondern über eine Messfläche erfolgt.

Die Rauheiten in den vorgenannten Grenzen sind aus verschiedenen Gründen vorteilhaft.

Mit einer Rauheit an der unteren Grenze des angegebenen Bereichs ist es noch immer möglich, einen ausreichenden Antihaft-Effekt der wenigstens einen Beschichtung zu erzielen. Auf der anderen Seite ist die Rauheit geringer als bei bekannten Antihaft-Beschichtungen des Standes der Technik, was vorteilhaft sein kann, wenn die wenigstens eine Beschichtung beispielsweise als Vorderseitenbeschichtung ausgebildet ist, also im Gebrauch des Glaselements vom Endanwender berührt werden kann. Eine zu raue Beschichtung kann hier nämlich nachteilig sein.

Je nach der genauen Ausgestaltung der Rauheit der wenigstens einen Beschichtung kann vorgesehen sein, diese vorzugsweise auf der betrieblichen Vorderseite des Glaselements oder auf der betrieblichen Rückseite anzuordnen. Unter der betrieblichen Vorder- bzw. Rückseite wird im Rahmen der vorliegenden Offenbarung die Seite des Glaselements verstanden, welche im eingebauten Zustand des Glaselements dem Anwender zu- bzw. abgewandt ist. Je nach genauer Einbausituation kann die Vorderseite auch als Oberseite und die Rückseite auch als Unterseite bezeichnet werden.

Die wenigstens eine Beschichtung kann auf der betrieblichen Vorderseite angeordnet sein, wobei hier auch eine hohe Rauheit der wenigstens einen Beschichtung vorliegen kann, sodass die wenigstens eine Beschichtung sowohl einen anti-sticking-Effekt beim Einbrand der Beschichtung ermöglicht als auch als haptische Beschichtung ausgestaltet ist. Allerdings ist es auch möglich, die Beschichtung auf der betrieblichen Rückseite anzuordnen. Hier zeigt sich der Vorteil des Glaselements nach der Offenbarung, da nämlich anders als andere Beschichtungen des Standes der Technik, welche einen anti-sticking-Effekt ermöglichen, hier eine gute Verklebbarkeit möglich ist.

Allgemein kann vorgesehen sein, dass nur die wenigstens eine Beschichtung so ausgestaltet ist, dass sie wenigstens einen Füllstoff umfasst, wie nach Ausführungsformen der Offenbarung ausführlich beschrieben, mit anderen Worten das Verhältnis (V) von der durchschnittlichen Partikelgröße (P) zur Schichtdicke (d) der wenigstens einen Beschichtung, V=P/d, höchstens 1 und wenigstens 0,01 beträgt. Es ist aber auch allgemein möglich und kann je nach genauer Ausgestaltung des Glaselements und dessen späterer Verwendung vorgesehen sein, dass auf beiden Seitenflächen des Glaselements jeweils wenigstens eine Beschichtung umfassend wenigstens einen Füllstoff angeordnet ist, also entsprechend der in der vorliegenden Offenbarung beschriebenen Ausführungen, also wobei das Verhältnis (V) von der durchschnittlichen Partikelgröße (P) zur Schichtdicke (d) der betreffenden Beschichtung, V=P/d, höchstens 1 und wenigstens 0,01 beträgt. Mit anderen Worten umfassen nach einer Ausführungsform des Glaselements beide Beschichtungen wenigstens einen Füllstoff umfassend temperaturstabile Partikel mit einer durchschnittlichen Partikelgröße, vorzugsweise angegeben als $d_{50}$, und haben eine Schichtdicke, wobei das Verhältnis (V) von der durchschnittlichen Partikelgröße (P) zur Schichtdicke (d), V=P/d, höchstens 1 und wenigstens 0,01 beträgt, wobei der wenigstens eine Füllstoff in der wenigstens Beschichtung und der wenigstens eine Füllstoff in der weiteren Beschichtung identisch sein können. Insbesondere können beide Beschichtungen identisch oder unterschiedlich ausgebildet sein, also im Rahmen der Messgenauigkeit und üblicher Fertigungstoleranzen die gleiche Schichtdicke aufweisen oder jeweils unterschiedliche Schichtdicken aufweisen. Der jeweils umfasste Füllstoff oder die ggf. umfassten Füllstoffe können identisch oder unterschiedlich sein, wobei eine Beschichtung auch mehrere Füllstoffe umfassen kann, die andere jedoch nur einen o.ä. Auch kann eine der beiden Beschichtungen ein Pigment umfassen, während die andere keines umfasst, und/oder beide Beschichtungen können ein Pigment oder auch mehrere Pigmente umfassen.

Nach einer Ausführungsform kann vorgesehen sein, dass wenigstens eine Beschichtung auf einer Seitenfläche des Glaselements bzw. Glassubstrats wenigstens ein Pigment umfasst. Insbesondere kann die wenigstens eine Beschichtung, welche wenigstens einen Füllstoff umfasst, zusätzlich wenigstens ein Pigment umfassen. Es kann aber auch vorgesehen sein, dass die der wenigstens einen Beschichtung gegenüber liegende weitere Beschichtung wenigstens ein Pigment umfasst. Dabei kann allgemein auch vorgesehen sein, dass die weitere Beschichtung entsprechend Ausführungsformen der Offenbarung ausgebildet ist, also wenigstens einen Füllstoff umfasst, wobei das Verhältnis (V) von der durchschnittlichen Partikelgröße (P) zur Schichtdicke (d) der betreffenden Beschichtung, V=P/d, höchstens 1 und wenigstens 0,01 beträgt.

Eine Ausgestaltung wenigstens einer der beiden Beschichtungen, die auf den unterschiedlichen Seiten des Glaselements angeordnet sind und mittels Erwärmen aufgebracht werden bzw. aufgebracht worden sind, kann vorteilhaft sein, wenn beispielsweise eine Beschichtung zur Abschattung von hinter dem Glaselement liegenden Bereichen dienen soll, wobei beispielsweise Bereiche ausgespart werden können, durch welche Beleuchtungselemente oder Anzeigeelement oder beispielsweise Displays gesehen werden sollen. Auf diese Weise kann die Bedienersicherheit erhöht werden, weil störende Elemente durch die eine Beschichtung, welche ein Pigment umfasst, abgeschattet werden und damit der Blick nicht von wesentlichen Elementen, beispielsweise Displays oder Bedienleuchten, wie sogenannte Restwärmeanzeigen, abgelenkt wird. Es ist selbstverständlich auch möglich, dass beide Beschichtungen auf den beiden Seitenflächen des Glaselements bzw. -substrats jeweils wenigstens ein Pigment umfassen, beispielsweise um unterschiedliche Farbeindrücke und/oder optische Anmutungen zu erzielen.

Nach einer weiteren Ausführungsform umfasst die wenigstens eine Beschichtung keine Füllstoffe, umfassend temperaturstabile Partikel, welche eine durchschnittliche Partikelgröße, vorzugsweise angegeben oder bezogen auf den $d_{50}$-Wert des volumenäquivalenten Kugeldurchmessers, von mehr als 1,2 $\mu$m aufweisen. Insbesondere kann vorge-sehen sein, dass die wenigstens eine Beschichtung im Rahmen üblicher Fertigungstoleranzen gar keine Füllstoffe umfassend Partikel mit einer Partikelgröße von mehr als 1,2 $\mu$m umfasst. Darunter wird beispielsweise verstanden, dass der Füllstoffe Partikel mit einem $d_{99}$ von höchstens gleich oder kleiner 1,2 $\mu$m aufweist, bezogen vorzugsweise auf den volumenäquivalenten Kugeldurchmesser der Partikel. Eine bevorzugte Untergrenze der Partikelgröße liegt hier, wie allgemein, bei 0,03 $\mu$m, bevorzugt bei 0,04 $\mu$m. Vorteilhaft umfasst der Füllstoffe keine Partikel mit einer Partikelgröße von mehr als 1,0 $\mu$m.

Unter einem temperaturstabilen Partikel bzw. einem Füllstoff umfassend temperaturstabile Partikel wird allgemein im Rahmen der vorliegenden Offenbarung verstanden, dass der Füllstoff Partikel umfasst, welche temperaturstabil ausgebildet sind und der Beschichtung, von welcher sie umfasst sind, eine bestimmte Oberflächenstruktur oder -textur verleihen, welche sich in einer Rauheit, wie sie beispielsweise nach Ausführungsformen mit den angegebenen $R_a$ bzw. $S_a$-Werten beschrieben werden können, niederschlagen können, und/oder darin, dass die Füllstoffpartikel sich auch an der Oberfläche der betreffenden Beschichtung, welche sie umfasst, anordnen.

Überraschenderweise hat sich gezeigt, dass auch wenn die wenigstens eine Beschichtung lediglich sehr kleine Füllstoffpartikel umfasst, wie vorstehend beschrieben, also Partikel, welche einen $d_{50}$ oder sogar einen $d_{99}$ von höchstens 1,2 $\mu$m, bevorzugt höchstens 1,0 $\mu$m, und vorzugsweise weniger aufweisen, dennoch ein ausreichender Antihaft-Effekt erzielt werden kann.

Eine bevorzugte Untergrenze der Partikelgröße liegt hier, wie allgemein, bei wenigstens 0,03 $\mu$m, bevorzugt bei wenigstens 0,04 $\mu$m. Zwar ist es prinzipiell möglich, beispielsweise zur Erzielung einer besonders großen Rauigkeit der resultierenden Beschichtung, dass die Beschichtung auch andere und größere Partikel umfasst. Dies ist allerdings nicht zwingend erforderlich und es kann besonders bevorzugt sein, auch in fertigungstechnischer Hinsicht, eben kleinere und feinere Partikel zu verwenden, beispielsweise, um entsprechende feine Strukturen herzustellen, beispielsweise mittels Siebdruck. Gerade für den Druck von Logos und/oder in einem Displaybereich, in welchem man eine möglichst klare Durchsicht gewährleisten will, kann dies besonders vorteilhaft sein.

Nach einer weiteren Ausführungsform umfasst die wenigstens eine Beschichtung ein Bindemittel, vorzugsweise ein glasbasiertes Bindemittel, besonders bevorzugt eine Glasfritte oder einen Glasfluss, wobei ganz besonders bevorzugt der Gehalt an Bindemittel, bezogen auf den Feststoffgehalt der wenigstens einen Beschichtung, wenigstens 25 Gew.-% und vorzugsweise höchstens 95 Gew.-%, bevorzugt höchstens 92 Gew.-%, beträgt. Auf diese Weise kann eine haftfeste Beschichtung erhalten werden, wobei dennoch die Gesamtfestigkeit des Glaselements gewährleistet sein kann. Deshalb sollte der Gehalt der wenigstens einen Beschichtung an Bindemittel auch nicht zu hoch sein.

Die vorliegende Offenbarung betrifft auch ein flüssiges Beschichtungsmittel, insbesondere ein flüssiges Beschichtungsmittel zum Herstellen eines Glaselements nach einer Ausführungsform. Das flüssige Beschichtungsmittel nach der vorliegenden Offenbarung ist insbesondere als eine Paste ausgebildet. Unter einer Paste wird im Rahmen der vorliegenden Offenbarung ein flüssiges Beschichtungsmittel verstanden, welches vorzugsweise eine Viskosität zwischen mehr als 800 mPa*s und weniger als 5500 mPa*s aufweist und insbesondere zum Aufbringen mittels eines Druckverfahrens, beispielsweise eines Tintenstrahldrucks oder eines Siebdrucks, geeignet ist.

Die Paste nach der Offenbarung umfasst

- wenigstens ein Bindemittel, bevorzugt ein glasbasiertes Bindemittel, besonders bevorzugt eine Glasfritte oder einen Glasfluss,
- wenigstens einen Füllstoff umfassend temperaturstabile Partikel, wobei die temperaturstabilen Partikel eine durchschnittliche Partikelgröße, vorzugsweise angegeben als $d_{50}$, von vorzugsweise höchstens 1,2 $\mu$m, besonders bevorzugt höchstens 1,0 $\mu$m, aufweisen, wobei eine bevorzugte Untergrenze der Partikelgröße bei wenigstens 0,03 $\mu$m, bevorzugt bei 0,04 $\mu$m, bevorzugt angegeben als $d_{50}$, liegen kann,

- wenigstens ein Medium, beispielsweise ein hochsiedendes Lösungsmittel und/oder ein Siebdrucköl,

wobei der Gehalt an Medium mehr als 20 Gew.-% und vorzugsweise weniger als 56 Gew.-%, bezogen auf das Gesamtgewicht der Paste, beträgt.

Unter einem hochsiedenden Lösungsmittel wird im Rahmen der vorliegenden Offenbarung ein vorzugsweise organisches Lösungsmittel verstanden, welches einen Siedepunkt von über 150°C aufweist. Geeignete Lösungsmittel können beispielsweise Glycolether sein. Siebdrucköle sind dem Fachmann bekannt, beispielsweise kann es sich dabei um Terpineole handeln.

Mit der Paste wie vorstehend beschrieben ist es möglich, ein Glaselement nach Ausführungsformen zu erhalten. Insbesondere können mit dieser Paste Beschichtungen erhalten werden, welche den beschriebenen Antihaft-Effekt aufweisen. Die Paste umfasst hier den wenigstens einen Füllstoff als Feststoff und kann insbesondere als weiteren Feststoff, ebenfalls, wie der wenigstens eine Füllstoff, das Bindemittel als Feststoff in Pulverform umfassen, insbesondere in Form eines Glasflusses/einer Glasfritte. Als fluiden Bestandteil umfasst die Paste das wenigstens eine Medium, wobei die Paste auch mehrere fluide Bestandteile, beispielsweise ein Lösungsmittelgemisch und/oder ein Gemisch unterschiedlicher Siebdrucköle, umfassen kann. der angegebene Gehalt von mehr als 20 Gew.-% und vorzugsweise weniger als 56 Gew.-% bezieht sich für den Fall, dass die Paste mehrere Medien umfasst, auf deren Gesamtgehalt; stets bezogen auf das Gesamtgewicht der Paste.

Mit einer solchen Paste ist es insbesondere möglich, die wenigstens eine Beschichtung lateral strukturiert aufzubringen für den Fall, dass die Beschichtung nicht ganzflächig aufzubringen ist, sondern die Seitenfläche, auf die sie aufgebracht werden soll, lediglich partiell bedecken soll. Beispielsweise ist eine solche Paste insbesondere auch für gängige Druckverfahren, beispielsweise Siebdruck und/oder Tintenstrahldruck, geeignet. Dabei ist es besonders vorteilhaft, dass die Paste - und in entsprechender Weise auch die aus dieser nach Einbrand resultierende Beschichtung - notwendig nur Partikel umfassen muss, welche eine durchschnittliche Partikelgröße, vorzugsweise angegeben als $d_{50}$, von höchstens 1,2 $\mu$m, vorzugsweise höchstens 1,0 $\mu$m, aufweisen. Denn auf diese Weise ist es möglich, dass beispielsweise für einen Siebdruck Siebe mit einem feinen Gewebe verwendet werden können. Damit können dünne Beschichtungen mit guter Auflösung hergestellt werden. Beispielsweise können auf diese Weise auch Logos gedruckt werden.

Nach einer Ausführungsform umfasst die Paste keine Füllstoffe umfassend temperaturstabile Partikel, welche eine durchschnittliche Partikelgröße, vorzugsweise angegeben als $d_{50}$, von mehr als 1,2 $\mu$m oder sogar keine Partikel mit einer durchschnittlichen Partikelgröße von mehr als 1,0 $\mu$m, vorzugsweise angegeben als $d_{50}$, aufweisen. Vorstehend wurde bereits zu den Ausführungsformen des Glaselements darauf hingewiesen, dass dies vorteilhaft gerade für die Herstellung von sehr feinen Beschichtungen und/oder von Beschichtungen, welche eine gute Durchsicht beispielsweise auf einen Displaybereich ermöglichen sollen, ist. In entsprechender Weise kann daher vorgesehen sein, dass die Paste gar keine Partikel mit einer durchschnittlichen Partikelgröße von mehr als 1,2 $\mu$m, vorzugsweise gar keine Partikel mit einer durchschnittlichen Partikelgröße von mehr als 1,0 $\mu$m, umfasst. Die Ausführungen für das Glaselement bzw. die wenigstens eine Beschichtung gelten hier für die Paste hinsichtlich der entsprechenden Bestandteile der wenigstens einen Beschichtung in entsprechender Weise, da sich die Feststoffbestandteil der Paste im Falle von Füllstoffpartikeln sowie (ggf.) Pigmentpartikeln in entsprechender Weise in der Beschichtung wiederfinden.

Nach einer Ausführungsform kann vorgesehen sein, dass die Paste wenigstens ein Pigment umfasst. Je nach der gewünschten optischen Anmutung der resultierenden wenigstens einen Beschichtung und/oder des Glaselements kann die Paste und, in entsprechender Weise, auch die wenigstens eine Beschichtung mehr als ein Pigment umfassen.

Nach einer Ausführungsform beträgt der Gehalt an Bindemittel wenigstens 23 Gew.-% und vorzugsweise weniger als 72 Gew.-%, bezogen auf das Gesamtgewicht der Paste. Auf diese Weise lassen sich Beschichtungen erhalten, welche gut haften und gut gegen mechanische Angriffe beständig sind, dennoch aber die mechanische Festigkeit des resultierenden Glaselements nicht kritisch beeinträchtigen. Gleichzeitig darf das Verhältnis von wenigstens einem Füllstoff zu Bindemittel nicht zu niedrig sein, da sonst die Partikel ihre Funktion als Strukturbildner nicht richtig ausüben könnten, sondern ggf. vollständig in der Beschichtungsmatrix aus dem Bindemittel versinken und der Antihaft-Effekt nicht ausreichend auftreten kann.

Die vorliegende Offenbarung betrifft auch allgemein ein Verfahren zum Herstellen eines scheibenförmigen Glaselements, vorzugsweise nach einer Ausführungsform, umfassend die Schritte:

- Bereitstellen eines scheibenförmigen Glassubstrats mit zwei Seitenflächen und einer umlaufenden Kantenfläche, wobei das scheibenförmige Glassubstrat vorzugsweise aus Kalk-Natron-Glas ist oder ein solches umfasst,
- Aufbringen einer ersten Nassschicht, vorzugsweise mittels eines Druckverfahren, bevorzugt mittels Siebdruck, auf eine erste Seitenfläche des Glassubstrats, wobei vorzugsweise eine Paste nach einer Ausführungsform verwendet wird,
- Erwärmen des mit einer ersten Nassschicht versehenen Glassubstrats in einem Ofen, sodass eine Beschichtung erhalten wird, wobei das Glassubstrat bevorzugt auf der unbeschichteten zweiten Seitenfläche aufliegt,

- Aufbringen einer zweiten Nassschicht, vorzugsweise mittels eines Druckverfahrens, bevorzugt mittels Siebdruck, auf eine zweite Seitenfläche des Glassubstrats,
- Erwärmen des mit der zweiten Nassschicht versehen Glassubstrats in einem Ofen, wobei das Glassubstrat während des Erwärmens so in dem Ofen platziert wird, dass es auf der Beschichtung liegt, sodass eine zweite Beschichtung erhalten wird, sodass ein scheibenförmiges Glaselement erhalten wird umfassend wenigstens zwei mittels Erwärmen aufgebrachte Beschichtungen, vorzugsweise Emaille-Beschichtungen, welche auf den unterschiedlichen Seitenflächen des scheibenförmigen Glassubstrats (bzw. in entsprechender Weise des resultierenden Glaselements) angeordnet sind, und wobei wenigstens eine Beschichtung, vorzugsweise die aus der ersten Nassschicht erhaltene Beschichtung, wenigstens einen Füllstoff umfassend temperaturstabile Partikel mit einer durchschnittlichen Partikelgröße, vorzugsweise angegeben als $d_{50}$, umfasst und eine Schichtdicke hat, wobei das Verhältnis (V) von der durchschnittlichen Partikelgröße (P) zur Schichtdicke (d), V=P/d, höchstens 1 und wenigstens 0,01 beträgt.

Die vorstehend genannten Schritte des Verfahrens nach der Offenbarung können dabei in unterschiedlicher Reihenfolge erfolgen. Die Beschichtung, welche beim Einbrand der zweiten Beschichtung die Unterlage kontaktiert, ist dabei notwendigerweise die wenigstens eine Beschichtung, welche den Füllstoff umfassend temperaturstabile Partikel umfasst, wie es in der vorliegenden Offenbarung zu den Ausführungsformen des Glaselements ausführlich beschrieben ist.

Allgemein wird vorzugsweise der Einbrand der Beschichtungen so vorgenommen, dass eine Ofentemperatur, welche für das thermische Vorspannen verwendet wird, eingestellt wird, beispielsweise also eine Temperatur von 670°C. Auch die sonstigen Bedingungen, die für das thermische Vorspannen üblicherweise gelten, können eingestellt werden. Vor die zuerst aufgebrachte Beschichtung wird jedoch vorzugsweise der nach dem Aufheizen auf die Vorspanntemperatur erfolgende schnelle Abkühlschritt (üblicherweise das Abschrecken des erwärmten Glassubstrats bzw. -elements durch Anblasen mit Luft, beispielsweise mit Luft bei Raumtemperatur) weggelassen. Beim Einbrand der als zweites aufgebrachten Beschichtung erfolgt dann vorzugsweise der normale Vorspannvorgang, also sowohl das Erhitzen des Glaselements/-substrats als auch dessen schnelles Abkühlen zum Erzeugen einer thermischen Vorspannung. Das Einbrennen der Beschichtung(en) kann dabei jeweils in einem üblichen Fertigungsaggregat zum thermischen Vorspannen erfolgen.

Es kann also vorgesehen sein, dass das scheibenförmige Glassubstrat aus Kalk-Natron-Glas ist und das Erwärmen (also der Einbrand) wenigstens einer Nassschicht, vorzugsweise beider Nassschichten, unter Erhalt einer Beschichtung während eines thermischen Vorspannvorgangs erfolgt. Dies ist nämlich ganz besonders vorteilhaft, da es einen sehr effizienten Prozess der thermischen Behandlung darstellt und gleichzeitig ein Glaselement mit erhöhter mechanischer Beständigkeit erhalten wird. Beispielsweise kann ein solches Glaselement vorteilhaft als Sichtscheibe in einer Heißanwendung, beispielsweise für einen Backofen, beispielsweise in einer Backofentür, eingesetzt werden.

Nach einer weiteren Ausführungsform des Verfahren erfolgt das Aufbringen wenigstens einer Nassschicht, vorzugsweise von beiden Nassschichten, mittels Siebdruck, wobei ein Sieb mit einer Maschenzahl von wenigstens 70 und nächstens 150 verwendet wird. Auf diese Weise werden Beschichtungen erhalten, welche eine Schichtdicke insbesondere im einstelligen Mikrometerbereich aufweisen. Solche Schichten sind ausreichend dick, um beispielsweise eine ausreichende Abschattung zu erzielen, falls es sich dabei um pigmentierte Beschichtungen handeln sollte, also um Beschichtungen, welche wenigstens ein Pigment umfassen. Allgemein sind solche Beschichtungen mit einer Schichtdicke im einstelligen Mikrometerbereich aber auch dick genug, um eine ausreichende Kratz- und Abriebfestigkeit zu ermöglichen. Gleichzeitig sind die mit den genannten Siebgeweben erzielbaren Auflösungen so gut, dass auch feine Muster gedruckt werden können. Schließlich sind die entsprechenden Beschichtungen auch dünn genug, um die Festigkeit des resultierenden Glaselements nicht in kritischer Weise zu beeinträchtigen, sondern genügen den Anforderungen an beispielsweise den Einsatz als Sichtscheibe in Heißanwendungen.

Nach einer weiteren Ausführungsform liegt das scheibenförmige Glassubstrat (bzw. das entsprechende scheibenförmige Glaselement) während wenigstens eines Erwärmens, vorzugsweise während beider Erwärmvorgänge auf einer Unterlagsplatte, welche vorzugsweise ein $SiO_2$-hatiges Material umfasst oder aus diesem besteht. Im Verfahren nach Ausführungsformen ist also ein vorzugsweise stets liegend erfolgendes Einbrennen der Nassschichten unter Erhalt der entsprechenden Beschichtung vorgesehen. Dies ist vorteilhaft, weil auf diese Weise auch Einbrenntemperaturen möglich sind, welche im Bereich der Glasübergangstemperatur ($T_g$) des Glases des Glaselements liegen oder sogar darüber. Dies ist nur möglich, wenn das Glassubstrat bzw. das aus diesem resultierende Element liegt, denn sonst würde es bei diesen Temperaturen zu dessen Verformung kommen. Hohe Einbrenntemperaturen sind aber vorteilhaft, weil auf diese Weise festere, d.h. mechanisch gegen Kratz- und/oder Abriebbelastungen stabilere Beschichtungen erhalten werden können.

Vorzugsweise ist die Unterlagsplatte, auf welcher das Glassubstrat/-element aufliegt, so ausgestaltet, dass es ein $SiO_2$-haltiges Material umfasst oder aus diesem besteht. Solche Unterlagsplatten werden beim Einbrand häufig eingesetzt und es hat sich gezeigt, dass diese chemisch inert und thermisch ausreichend stabil sind. Darüber hinaus hat sich überraschend gezeigt, dass der Antihaft-Effekt der wenigstens einen Beschichtung besonders gut bei diesen Unterlagsplatten auftritt. Dies ist überraschend, da besonders gute Antihaft-Effekte ja gerade in Ausführungsformen mit Füllstoffen aus oder umfassend $SiO_2$ erhalten werden. Trotz der an sich hohen chemischen Kompatibilität der Materialien zeigt sich dennoch, dass es zu keiner Reaktion kommt und insbesondere der Antihaft-Effekt zum Tragen kommt, insbesondere also Beschädigungen an der Beschichtung, auf welcher das Glaselement/-substrat beim Einbrennvorgang aufliegt, vermindert werden können oder idealerweise sogar gänzlich unterbleiben.

Allgemein betrifft die Offenbarung auch ein scheibenförmiges Glaselement, insbesondere nach Ausführungsformen, hergestellt oder herstellbar mit einer Paste nach Ausführungsformen und/oder in einem Verfahren nach einer Ausführungsform.

Die Offenbarung betrifft auch ein Hausgerät, beispielsweise einen Backofen und/oder Kamin und/oder Herd, umfassend ein scheibenförmiges Glaselement nach Ausführungsformen, beispielsweise hergestellt oder herstellbar mit einer Paste nach Ausführungsformen und/oder in einem Verfahren nach einer Ausführungsform.

Weiterhin betrifft die Offenbarung auch die Verwendung eines solches Glaselements, beispielsweise als Sichtscheibe und/oder Bedienblende, beispielsweise in einem Hausgerät, wie einem Backofen und/oder einem Kamin und/oder einem Herd, oder als Bestandteil in einem Sicherheitsglaslaminat und/oder als Kochfläche und/oder als Frontscheibe in einem Möbel und/oder einem elektrischen Gerät und/oder als Scheibenelement in der Innen- und/oder Außenarchitektur.

Beispiele

Die Erfindung wird im Folgenden anhand von Beispielen näher erläutert.

Beispiel 1

Ein allgemeiner Zusammensetzungsbereich einer Paste, mit welcher die wenigstens eine Beschichtung des Glaselements, welche wenigstens einen Füllstoff umfassend temperaturstabile Partikel mit einer durchschnittlichen Partikelgröße, vorzugsweise angegeben als $d_{50}$, umfasst und eine Schichtdicke hat, wobei das Verhältnis (V) von der durchschnittlichen Partikelgröße (P) zur Schichtdicke (d) der wenigstens einen Beschichtung, V=P/d, höchstens 1 und wenigstens 0,01 beträgt, ist im Folgenden aufgeführt. Die Angaben beziehen sich auf Gew.-%, bezogen auf das Gesamtgewicht der Paste.

| Komponente | Untergrenze | Obergrenze |
| --- | --- | --- |
| Bindemittel (gesamt) | 23 | Weniger als 72 |
| Füllstoff (gesamt) | größer als 2, bevorzugt größer als 2,5 | weniger als 25 |
| Medium (gesamt) | Mehr als 20 | Weniger als 56 |
| Pigment (gesamt) | Sofern vorhanden, bevorzugt mindestens 5 | höchstens 20, bevorzugt höchstens 8 |

Als Bindemittel kommt, wie ausgeführt, insbesondere ein glasbasiertes Bindemittel in Betracht, vorzugsweise eine Glasfritte oder ein Glasfluss, welcher der Paste in Form eines Pulvers zugegeben werden kann. Es kann sich dabei auch um ein Gemisch unterschiedlicher zusammengesetzter Glaspulver handeln, welche sich beim Einbrennen zu einer glasigen Matrix verbinden. Die Angaben in der vorstehenden Tabelle beziehen sich dabei stets auf den Gesamtgehalt an der jeweiligen Komponente für den Fall, dass die Paste (und in entsprechender Weise die aus ihr resultierende Beschichtung) mehr als ein Bindemittel, mehr als einen Füllstoff etc. umfasst.

Als Pigmente kommen allgemein vorzugsweise anorganische, nichtmetallische Pigmente in Betracht, insbesondere sogenannte keramische Pigmente, wie Metalloxide, beispielsweise Spinellpigmente. Beispielsweise können sogenannte Chrom-Kupfer-Spinelle zur Erzeugung eines schwarzen Farbeindrucks verwendet werden, $TiO_2$ und/oder $ZrO_2$ können als Weißpigmente eingesetzt werden. Dem Fachmann sind solche anorganischen, nichtmetallischen, vorzugsweise oxidischen Pigmente bekannt und er wird sie entsprechend zur Erzeugung des gewünschten Farbeindrucks einsetzen.

Weiterhin ist es auch möglich, dass die Beschichtung als Pigment Effektpigmente umfasst, beispielsweise glimmerbasierte Effektpigmente, wie sie beispielsweise unter dem Handelsnamen bzw. der Marke "Iriodin" bekannt sind. Selbstverständlich ist auch eine Mischung aus einem oder mehreren keramischen Pigmenten mit einem oder mehreren Effektpigmenten möglich.

Es ist auch möglich, zunächst eine erste Beschichtung aufzubringen, welche eine pigmentierte Beschichtung ist, und auf diese die wenigstens eine Beschichtung nach Ausführungsformen aufzubringen, welche den Füllstoff umfassend temperaturstabile Partikel umfasst, wie vorstehend beschrieben wurde. Auf diese Weise wird auf einer Seitenfläche des Glaselements also ein Zweischichter aufgetragen, wobei die oberste Beschichtung eine solche mit einem anti-sticking-Effekt nach Ausführungsformen ist. In diesem Fall ist also zwischen der Seitenfläche des Glaselements/-substrats eine Zwischenschicht angeordnet, welche auch als pigmentierte Zwischenschicht ausgebildet sein werden kann.

Allgemein kann als eine Ausgestaltung des scheibenförmigen Glaselements nach der Offenbarung vorgesehen sein, wobei zwischen wenigstens einer der mittels Erwärmen aufgebrachte Beschichtungen und einer der beiden Seitenflächen des scheibenförmigen Glassubstrats wenigstens eine weitere Beschichtung aufgebracht ist, welche beispielsweise als pigmentierte Beschichtung ausgestaltet sein kann, insbesondere als pigmentierte Emailleschicht.

Bevorzugte Füllstoffe umfassen allgemein keramische Füllstoffe, wobei hier Füllstoffe aus oder umfassend $SiO_2$ besonders vorteilhaft und entsprechend auch besonders bevorzugt sind. In der nachfolgenden Tabelle sind einige potentielle Füllstoffe, insbesondere aus oder umfassend $SiO_2$, aufgeführt.

| Material | Bezeichnung | Manufacturer | Partikelform | Größe [$\mu$m] |
|---|---|---|---|---|
| Pyrogene Kieselsäure | Aerosil (unterschiedliche) | Merck | kugelig | 0,04 |
| Polymethylsilsesquioxan | Tospearl 145A | Momentive Performance Materials GmbH | kugelig | 4,5 |
| Polymethylsilsesquioxan | E+508 | Coating Products | kugelig | 1,0 |
| Polymethylsilsesquioxan | ME 1,0 | Coating Products | kugelig | 1 |
| Borosilikatglas | W 210 | 3M | kugelig | 3 |
| Alkalialmuninosilikatglas | W 410 | 3M | kugelig | 4 |
| keramisch ($SiO_2$-$Al_2O_3$) | Zeeospheres ceramic | Zeeospheres ceramic, LLC | kugelig | 5 |
| $\alpha$-Aluminiumoxid | Plain $Al_2O_3$, microspheres,C-ALU-35. | Microspheres-Nanospheres, Corpuscular Inc. | kugelig | 4 |
| Titanoxid | Plain $TiO_2$ microspheres, C-TIO-5 | Microspheres-Nanospheres, Corpuscular Inc. | kugelig | 5 |
| Borosilikatglas | Spheriglass Solid Glass Microspheres Grade 500 | Potters Industries LLC | kugelig | 5 |
| Kolloidale Kieselsäure ($SiO_2$) | Quartron SP-03F | Fuso Chemicals CO,. Ltd. | kugelig | 0,35 |
| Kolloidale Kieselsäure ($SiO_2$) | Quartron PL-20 | Fuso Chemicals CO,. Ltd. | kugelig | 0,22 |
| Polymethylsilsesquioxan | E+710 | Coating Products | kugelig | 8,4 |

Während einige der vorgenannten Füllstoffe zu große Partikel aufweisen, um als alleinige temperaturstabile Füllstoffpartikel von der wenigstens einen Beschichtung des Glaselements umfasst zu sein, können diese Füllstoffe dennoch von der Beschichtung nach Ausführungsformen umfasst sein, beispielsweise, um die Eigenschaften der Beschichtung und/oder des Glaselements positiv zu beeinflussen.

Wichtige Füllstoffe sind, alleine oder in Kombination, insbesondere Kieselsäurepartikel, sei es pyrogene Kieselsäure, wie sie beispielsweise unter der Bezeichnung "Aerosil" vertrieben werden, oder kolloidale Kieselsäuren, oder Partikel aus bzw. umfassend Polymethylsilsesquioxan. Die Erfinder gehen davon aus, dass auch Partikel aus oder umfassend beispielsweise $Al_2O_3$, ein Glas, $TiO_2$ und/oder $ZrO_2$ sowie ggf. und/oder $SiO_2$ als temperaturstabile Partikel mit einer kleinen Partikelgröße von höchstens 1,2 $\mu$m, vorzugsweise höchstens 1,0 $\mu$m, prinzipiell geeignet sind, um den Antihaft-Effekt der wenigstens einen Beschichtung des Glaselements nach der Offenbarung zu erzeugen, weniger also die genaue Zusammensetzung von Bedeutung ist als vielmehr die - geringe - Partikelgröße, wie sie weiter vorne auch ausführlich beschrieben ist.

Bindemittel können allgemein vorzugsweise $SiO_2$-basierte Bindemittel sein. Besonders bevorzugt sind Glasflüsse, wobei beispielsweise sogenannte Bismutborat- und/oder Zinkboratflüsse bevorzugt sind. Es können beispielsweise Bismutborat-Glasflüsse verwendet werden, oder Bismutzinksilikat-Glasflüsse, oder Zinksilikat-Glasflüsse.

Beschreibung der Zeichnungen

Die Erfindung wird im Folgenden anhand von Figuren weiter erläutert. Es zeigen

Fig. 1 und 2 schematische und nicht maßstabsgetreue Darstellungen von Ansichten des Glaselements nach Ausführungsformen, sowie

Fig. 3 bis 6 rasterelektronenmikroskopische Aufnahmen von Glaselementen nach Ausführungsformen.

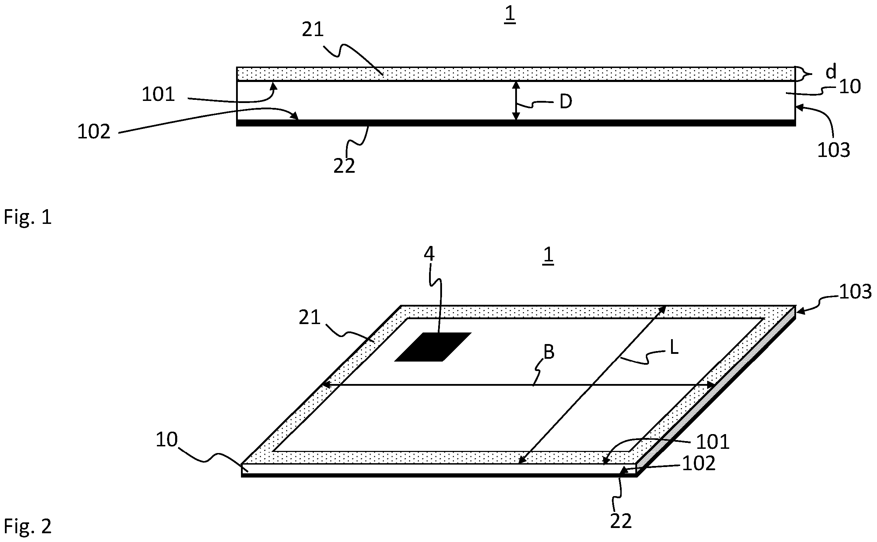

Fig. 1 zeigt in schematischer und nicht maßstabsgetreuer Darstellung eine Schnittansicht durch ein Glaselement 1 nach einer Ausführungsform. Das Glaselement 1 ist scheibenförmig ausgebildet, was bedeutet, dass seine Dicke D wenigstens eine größer ist als seine Länge L und Breite B, wie sie auch in Fig. 2 entsprechend in der schematischen und nicht maßstabsgetreuen perspektivischen Ansicht eines Glaselements 1 nach einer Ausführungsform bezeichnet sind. Durch Länge L und Breite B des Glaselements 1 - bzw. in entsprechender Weise des Glassubstrats 10 - ergeben sich die Seitenflächen 101, 102 des Glaselements 1 bzw. in entsprechender Weise des Glassubstrats 10, wie dies auch weiter oben betreffend bereits erläutert wurde. Die beiden Seitenflächen 101, 102 des Glaselements 1 bzw. des Glassubstrats 10 liegen einander gegenüber und sind vorzugsweise im Rahmen üblicher Fehlertoleranzen und/oder Fertigungstoleranzen parallel zueinander. Verbunden werden sie durch die umlaufende Kantenfläche 103.

Das scheibenförmige Glaselement 1 umfasst also ein scheibenförmiges Glassubstrat 10, mit den zwei Seitenflächen 101, 102 und der umlaufenden Kantenfläche 103. Vorzugsweise ist das Glassubstrat 10 aus Kalk-Natron-Glas ausgebildet oder umfasst ein solches. Das Glaselement 1 weist wenigstens zwei mittels Erwärmen aufgebrachte Beschichtungen 21, 22 auf, bei denen es sich um glasbasierte Beschichtungen, vorzugsweise um Emaille-Beschichtungen oder kurz Emaillen, handeln kann. Diese Beschichtungen 21, 22 sind auf den unterschiedlichen Seiten 101, 102 des scheibenförmigen Glassubstrats 10 angeordnet. Wenigstens eine Beschichtung, hier die Beschichtung 21, welche auf der Seitenfläche 101 angeordnet ist, hat die Schichtdicke d und umfasst wenigstens einen Füllstoff umfassend temperaturstabile Partikel, welche hier durch die "Pünktchen", welche innerhalb der Beschichtung 21 angeordnet sind, angedeutet sind, aufgrund von deren geringer Größe, gerade auch in Bezug auf die Schichtdicke d der Beschichtung 21, hier nicht bezeichnet wurden. Denn die temperaturstabilen Partikel des Füllstoffs weisen eine durchschnittliche Partikelgröße, die vorzugsweise als $d_{50}$, bezogen auf den volumenäquivalenten Kugeldurchmesser der Partikel, angegeben ist, und wobei das Verhältnis V von der durchschnittlichen Partikelgröße P zur Schichtdicke d der wenigstens einen Beschichtung 21

$$V = \frac{P}{d}$$

höchstens 1 und wenigstens 0,01 beträgt. Eine bevorzugte Untergrenze der Partikelgröße liegt hier, wie allgemein, bei wenigstens 0,03 µm, bevorzugt bei wenigstens 0,04 µm. Mit anderen Worten und wie hier schematisch aufgezeigt können die temperaturstabilen Partikel, die vom Füllstoff umfasst sind, also lediglich eine durchschnittliche Partikelgröße aufweisen, die lediglich ein Bruchteil der Schichtdicke beträgt, und höchstens so groß sein wie die Schichtdicke selbst, wobei kleiner ausgebildete Füllstoffpartikel und entsprechend ausgebildete Füllstoffe, die lediglich kleine Partikel umfasst, bevorzugt sein können.

Auf diese Weise sind kleine Schichtdicke d möglich, welche nach einer Ausführungsform im einstelligen Mikrometerbereich liegen. Vorzugsweise ist die Schichtdicke größer als 1 µm und bevorzugt kleiner als 8 µm.

Geeignete Gehalt der wenigstens einen Beschichtung 21 an Füllstoff betragen zwischen wenigstens 5 Gew.-% und vorzugsweise höchstens 30 Gew.-%, bezogen auf den Feststoffgehalt der wenigstens einen Beschichtung 21, wobei für den Fall, dass die wenigstens eine Beschichtung 21 mehr als einen Füllstoff umfasst, der Gesamtgehalt an Füllstoff betrachtet ist. Höhere Gehalte an Füllstoff können dabei zu schlecht haftenden Beschichtungen führen. Zu geringe Füllstoffgehalte können allerdings dazu führen, dass die Vorteile der wenigstens einen Beschichtung 21, welche allgemein in ihrem Antihaft-Effekt liegt, sodass beispielsweise beim Einbrand der Beschichtung 22, welche der wenigstens einen Beschichtung 21 mit Antihaft-Effekt gegenüberliegt und bei diesem Einbrand der Beschichtung 22 auf einer Unterlage oder Unterlagsplatte aufliegen würde, nicht mehr gewährleistet wäre. Zu hohe Füllstoffgehalte können weiterhin auch, da die Partikel des Füllstoffs ja wie ausgeführt recht klein sind, einen stark eindickenden Effekt auf das zumeist flüssige Beschichtungsmittel, beispielsweise eine Paste, wie eine Siebdruckpaste, haben, sodass sich diese nicht oder nur schlecht auftragen ließe oder auch die Topfzeit des flüssigen Beschichtungsmittels, beispielsweise der Paste, negativ beeinflusst, nämlich vermindert, werden könnte.

Die temperaturstabilen Partikel weisen nach einer Ausführungsform eine durchschnittliche Partikelgröße, vorzugsweise angegeben als $d_{50}$, von höchstens 1,2 µm, vorzugsweise höchstens 1,0 µm, auf, wobei die durchschnittliche Partikelgröße vorzugsweise allgemein, ohne Beschränkung auf eine spezielle Ausführungsform des Glaselements 1, auf den volumenäquivalenten Kugeldurchmesser der Partikel bezogen ist. Eine bevorzugte Untergrenze der Partikelgröße liegt hier, wie allgemein, bei wenigstens 0,03 μm, bevorzugt bei wenigstens 0,04 μm.

Es kann allgemein vorgesehen sein, dass die wenigstens eine Beschichtung 21 neben dem wenigstens einen Füllstoff noch einen weiteren Füllstoff, vorzugsweise mit temperaturstabilen Partikeln umfasst, also mit solchen Partikeln, welche ebenfalls eine durchschnittliche Partikelgröße, vorzugsweise angeben als $d_{50}$ der Korngrößenverteilung, und bevorzugt allgemein bezogen auf den volumenäquivalenten Kugeldurchmesser, aufweisen, wobei das Verhältnis von der durchschnittlichen Partikelgröße zur Schichtdicke d der wenigstens einen Beschichtung 21 höchstens 1 und wenigstens 0,01 beträgt. Der weitere Füllstoff weist dabei Partikel auf, welche bei denen die durchschnittliche Partikelgröße, vorzugsweise angegeben als $d_{50}$, des weiteren Füllstoffs, von der des wenigstens einen Füllstoffs verschieden ist und wobei vorzugsweise die durchschnittliche Partikelgröße, vorzugsweise angegeben als $d_{50}$, beider Füllstoffe höchstens 1,2 μm, vorzugsweise höchstens 1,0 μm, beträgt. Allgemein ist es aber auch möglich, dass die Partikel des weiteren Füllstoffs größer sind als die der im Rahmen der Offenbarung als temperaturstabile Partikel bezeichneten Partikel.

Wie man insbesondere der Darstellung von Fig. 2 entnehmen kann, kann vorgesehen sein, dass die Beschichtung 21 lediglich auf einen Teil der Seitenfläche 101 des Glassubstrats 10 und entsprechend des Glaselements 1 aufgebracht ist, was im Rahmen der vorliegenden Offenbarung als lateral strukturiert aufgebracht bezeichnet werden kann. Es kann auch vorgesehen sein, dass auf einer Seitenflächen 101, 102 eine oder mehrere weitere Schichten 4 aufgebracht sind, welche beispielsweise auch mit der Beschichtung 21 und/oder der Beschichtung 22 partiell überlappen können. Die weitere Schicht 4 kann beliebig hergestellt sein, beispielsweise mittels eines Druckverfahrens aufgebracht, und es muss sich dabei ebenfalls nicht um eine mittels Erwärmen aufgebrachte Schicht handeln. Allgemein kann vorgesehen sein, dass die Beschichtung 21 vollflächig oder im Wesentlichen vollflächig, also zu mindestens 95 %, die Seitenfläche 101 bedeckt, oder nur partiell aufgebracht ist, beispielsweise in Form eines Rahmens, wie dies in Fig. 2 dargestellt ist. Die Beschichtung 21 kann alternativ oder zusätzlich auch in Form eines Rasters, beispielsweise eines Punktrasters, auf die Seitenfläche 101 aufgebracht sein. Entsprechendes gilt für die Beschichtung 22. Die der wenigstens einen Beschichtung 21, welche temperaturstabile Partikel eines Füllstoffs umfasst, wie dies auch vorstehend im Detail bereits erläutert wurde, gegenüberliegende Beschichtung 22 kann ebenfalls einen solchen Füllstoff umfassen. Sie kann im Wesentlichen identisch zur Beschichtung 21 aufgebaut sein oder auch hinsichtlich ihrer Zusammensetzung deutlich abweichen, beispielsweise Pigment umfassen, während die Beschichtung 21 pigmentfrei ausgebildet ist, oder auch füllstofffrei ausgebildet sein. Die genaue Ausgestaltung der Beschichtung 22 im Vergleich zur Beschichtung 21 hängt dabei vom Einsatz des Glaselements 1 ab und kann im Wesentlichen recht flexibel gewählt werden.

Vorzugsweise umfasst die wenigstens eine Beschichtung 21 keine Füllstoffe umfassend temperaturstabile Partikel, welche eine durchschnittliche Partikelgröße, vorzugsweise angegeben als $d_{50}$, von mehr als 1,2 μm, vorzugsweise von mehr als 1,0 μm, aufweisen.

Vorteilhaft kann allgemein vorgesehen sein, dass das Glaselement 1 thermisch vorgespannt vorliegt, insbesondere, wenn das Glassubstrat 10 aus Kalk-Natron-Glas ausgebildet ist oder ein solches umfasst. Insbesondere kann vorgesehen sein, dass eine Beschichtung oder auch beide Beschichtungen 21, 22 während des thermischen Vorspannprozesses eingebrannt werden können.

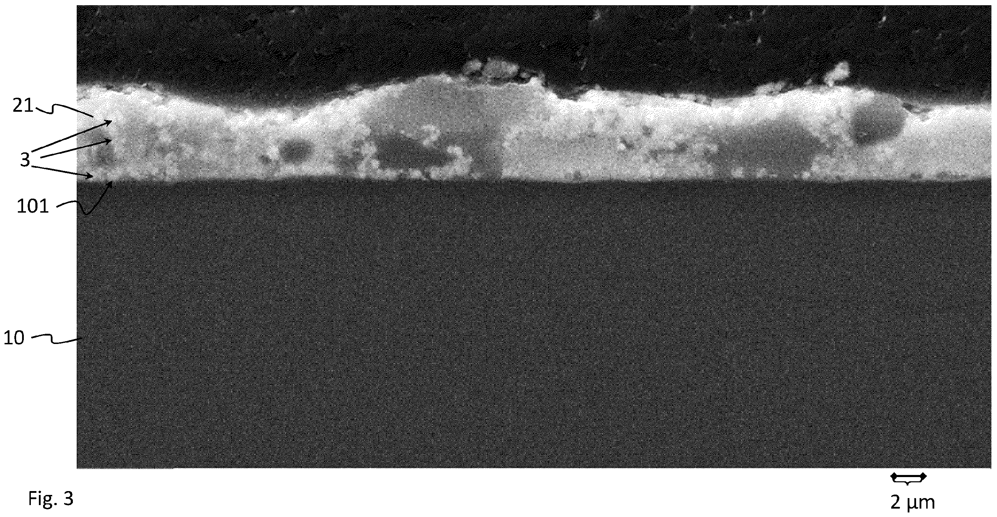

Fig. 3 zeigt eine erste rasterelektronenmikroskopische Aufnahme. Darstellt ist ein Schnitt durch die wenigstens eine Beschichtung 21, welche auf der Seite 101 des Glassubstrats 10 angeordnet ist. Die Beschichtung 21 umfasst wenigstens einen Füllstoff umfassend Partikel 3, welche hier beispielhaft bezeichnet wurden. Sie sind innerhalb der Beschichtungsmatrix der Beschichtung 21 als weiße Partikel erkennbar. Ebenfalls angegeben ist im unteren Bereich der Fig. 3 der Maßstab. Die Dicke der Beschichtung 21 liegt also, wie daraus ersichtlich ist, im einstelligen Mikrometerbereich und die Füllstoffpartikel 3 weisen hier eine durchschnittliche Partikelgröße auf, die nur einen Bruchteil der Schichtdicke beträgt. Erkennbar ist ebenfalls, dass Füllstoffpartikel auch an der Oberfläche der Beschichtung 21 angeordnet sein können. Dies kann allgemein, ohne Beschränkung auf eine Ausführungsform, vorteilhaft sein zur Unterstützung des sogenannten Antihaft-Effekts der Beschichtung 21. Allgemein ist daher nach einer Ausführungsform vorgesehen, dass die temperaturstabilen Partikel zumindest auch an der Grenzfläche der Beschichtung 21 zur Umgebung angeordnet sind, also an der Oberfläche der Beschichtung 21.

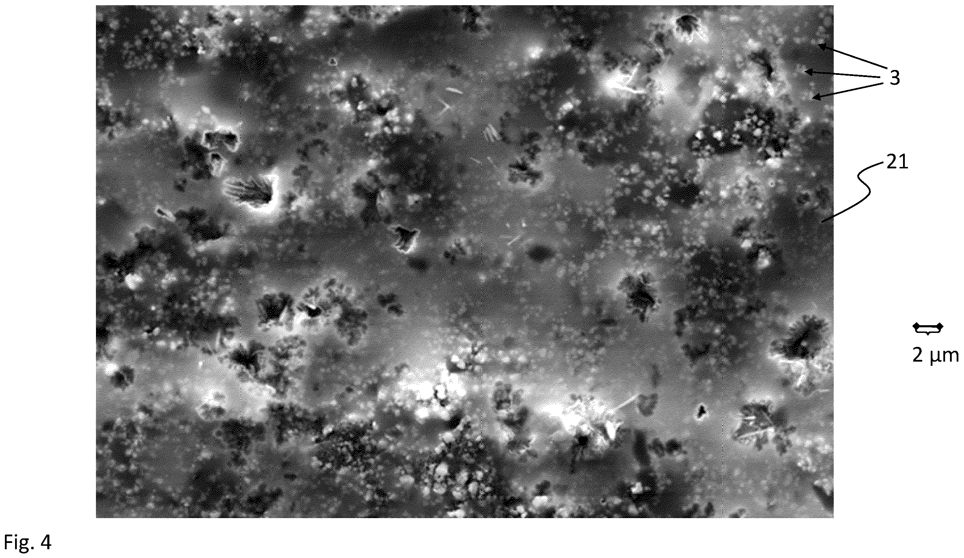

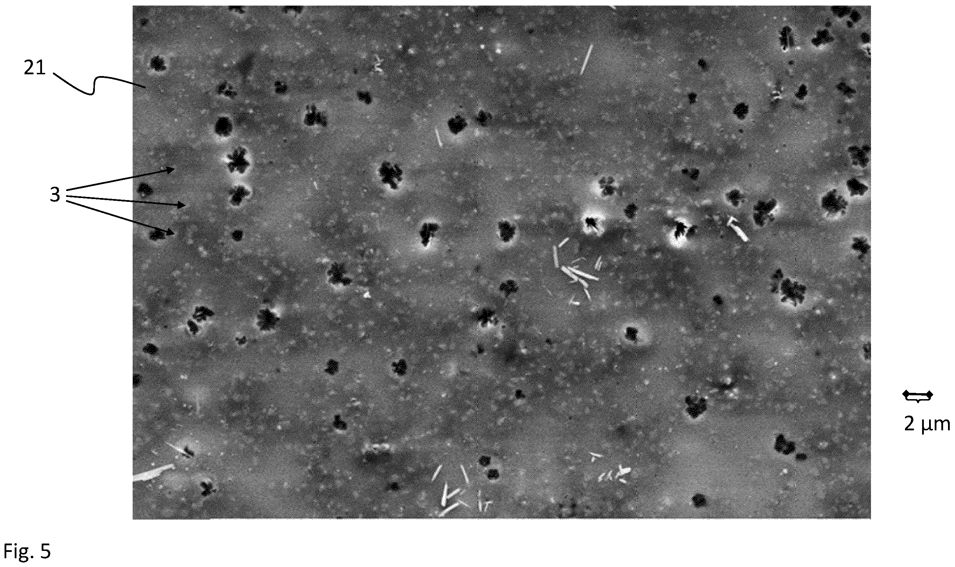

Diese zumindest partielle Anordnung der Partikel 3 auch an der Oberfläche der Beschichtung 21 ist beispielhaft ebenfalls in den rasterelektronenmikroskopischen Aufnahmen von Beschichtungen 21 in Fig. 4 und 5 erkennbar. Auch hier ist jeweils im rechten Bereich der betreffenden Figur der Maßstab angegeben. Partikel 3 sind beispielhaft jeweils bezeichnet und sind zumindest teilweise auch an der Oberfläche der Beschichtung 21 angeordnet.

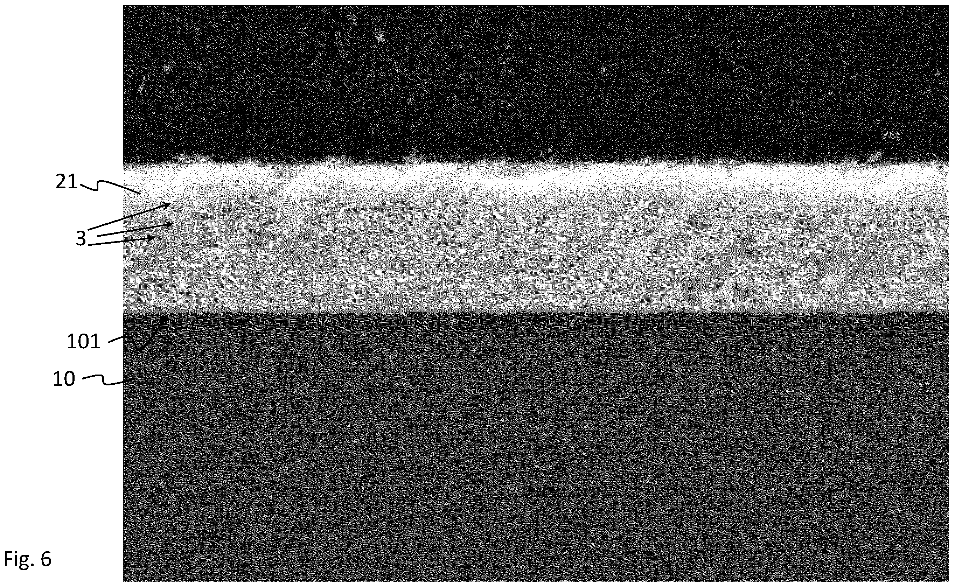

Schließlich zeigt Fig. 6 eine nochmals weitere Schnittansicht durch ein Glassubstrat 10 und eine Beschichtung 21 mit Füllstoffpartikeln 3. Während die Beschichtung 21 in Fig. 3 eine relativ hohe Rauigkeit, gekennzeichnet durch eine schwankende Schichtdicke, aufzuweisen scheint, ist die Beschichtung 21 in der Darstellung der Fig. 6 gleichmäßiger ausgebildet. Allgemein sind, ohne Beschränkung auf Ausführungsformen, Rauheiten $R_a$ und/oder $S_a$ der wenigstens einen Beschichtung 21 von wenigstens 0,1 μm und höchstens 2,5 μm möglich.

Bezugszeichenliste

| 1 | Glaselement |
|---|---|
| 10 | Glassubstrat |
| 101, 102 | Seitenflächen von Glaselement bzw. Glassubstrat |
| 103 | Kantenfläche von Glaselement/-substrat |
| 21, 22 | Beschichtungen |
| 3 | Partikel, Füllstoffpartikel |
| 4 | Weitere Schicht |
| d | Dicke der Beschichtung |
| D, B, L | Dicke, Breite, Länge des Glaselements/Glassubstrats |

**Patentansprüche**

**1.** Scheibenförmiges Glaselement (1), umfassend ein scheibenförmiges Glassubstrat (10), mit zwei Seitenflächen (101, 102) und einer umlaufenden Kantenfläche (103), vorzugsweise gebildet aus oder umfassend Kalk-Natron-Glas, aufweisend wenigstens zwei mittels Erwärmen aufgebrachte Beschichtungen (21, 22), vorzugsweise Emaille-Beschichtungen, welche auf den unterschiedlichen Seitenflächen (101, 102) des scheibenförmigen Glassubstrats (10) angeordnet sind, und wobei wenigstens eine Beschichtung (21) wenigstens einen Füllstoff umfassend temperaturstabile Partikel (3) mit einer durchschnittlichen Partikelgröße (P), vorzugsweise angegeben als $d_{50}$, umfasst und eine Schichtdicke (d) hat, wobei das Verhältnis (V) von der durchschnittlichen Partikelgröße zur Schichtdicke (d) der wenigstens einen Beschichtung (21)

$$V = \frac{P}{d}$$

höchstens 1 und wenigstens 0,01 beträgt.

**2.** Scheibenförmiges Glaselement (1) nach Anspruch 1, wobei die Schichtdicke (d) der wenigstens einen Beschichtung (21) größer als 1 $\mu$m und vorzugsweise kleiner als 8 $\mu$m ist.

**3.** Scheibenförmiges Glaselement (1) nach einem der Ansprüche 1 oder 2, wobei die wenigstens eine Beschichtung (21) wenigstens 5 Gew.-% und vorzugsweise höchstens 30 Gew.-% Füllstoff, bezogen auf den Feststoffgehalt der wenigstens einen Beschichtung (21) umfasst, wobei für den Fall, dass die wenigstens eine Beschichtung (21) mehr als einen Füllstoff umfasst, der Gesamtgehalt an Füllstoff betrachtet ist.

**4.** Scheibenförmiges Glaselement (1) nach einem der Ansprüche 1 bis 3, wobei die temperaturstabilen Partikel (3) eine durchschnittliche Partikelgröße, vorzugsweise angegeben als $d_{50}$, von höchstens 1,2 $\mu$m, bevorzugt höchstens 1,0 $\mu$m, aufweisen, wobei eine bevorzugte Untergrenze der durchschnittlichen Partikelgröße, vorzugsweise angegeben als $d_{50}$, wenigstens 0,03 $\mu$m, vorzugsweise wenigstens 0,4 $\mu$m betragen kann.

**5.** Scheibenförmiges Glaselement (1) nach einem der Ansprüche 1 bis 4, wobei die wenigstens eine Beschichtung (21) einen weiteren Füllstoff umfassend temperaturstabile Partikel (3) umfasst, wobei die durchschnittliche Partikelgröße, vorzugsweise angegeben als $d_{50}$, des weiteren Füllstoffs, von der des wenigstens einen Füllstoffs verschieden ist und wobei vorzugsweise die durchschnittliche Partikelgröße, vorzugsweise angegeben als $d_{50}$, beider Füllstoffe höchstens 1,2 $\mu$m, vorzugsweise höchstens 1,0 $\mu$m, beträgt, wobei eine bevorzugte Untergrenze der durchschnittlichen Partikelgröße, vorzugsweise angegeben als $d_{50}$, wenigstens 0,03 $\mu$m, vorzugsweise wenigstens 0,4 $\mu$m betragen kann.

**6.** Scheibenförmiges Glaselement (1) nach einem der Ansprüche 1 bis 5, wobei das scheibenförmige Glaselement (1) thermisch vorgespannt ist.

7. Scheibenförmiges Glaselement (1) nach einem der Ansprüche 1 bis 6, aufweisend wenigstens eines der folgenden Merkmale:

- der wenigstens eine Füllstoff ist aus $SiO_2$ ausgebildet oder umfasst $SiO_2$, wobei vorzugsweise alle der von der wenigstens einen Beschichtung (21) umfassten Füllstoffe aus $SiO_2$ ausgebildet sind oder $SiO_2$ umfassen;
- die wenigstens eine Beschichtung (21) weist eine Rauheit $R_a$ von wenigstens 0,1 $\mu$m und höchstens 2,5 $\mu$m auf;
- wenigstens eine Beschichtung (21, 22) umfasst wenigstens ein Pigment;
- die wenigstens eine Beschichtung (21) umfasst keine Füllstoffe umfassend temperaturstabile Partikel (3), welche eine durchschnittliche Partikelgröße, vorzugsweise angegeben als $d_{50}$, von mehr als 1,2 $\mu$m, bevorzugt von mehr als 1,0 $\mu$m, aufweisen;
- die wenigstens eine Beschichtung (21) umfasst ein Bindemittel, bevorzugt ein glasbasiertes Bindemittel, besonders bevorzugt eine Glasfritte oder einen Glasfluss, wobei ganz besonders bevorzugt der Gehalt an Bindemittel, bezogen auf den Feststoffgehalt der wenigstens einen Beschichtung (21), wenigstens 25 Gew.-% und vorzugsweise höchstens 95, Gew.-%, bevorzugt höchstens 92 Gew.-% beträgt;
- beide Beschichtungen (21, 22) umfassen wenigstens einen Füllstoff umfassend temperaturstabile Partikel (3) mit einer durchschnittlichen Partikelgröße, vorzugsweise angegeben als $d_{50}$, und haben eine Schichtdicke (d), wobei das Verhältnis (V) von der durchschnittlichen Partikelgröße (P) zur Schichtdicke (d, $d_1$, $d_2$) der Beschichtungen (21, 22)

$$V = \frac{P}{d}$$

höchstens 1 und wenigstens 0,01 beträgt, wobei der wenigstens eine Füllstoff in der wenigstens einen Beschichtung (21) und der wenigstens eine Füllstoff in der weiteren Beschichtung (22) identisch sein können;
- zwischen wenigstens einer der mittels Erwärmen aufgebrachte Beschichtungen (21, 22) und einer der beiden Seitenflächen (101, 102) des scheibenförmigen Glassubstrats (10) ist wenigstens eine weitere Beschichtung aufgebracht.

8. Verfahren zum Herstellen eines scheibenförmigen Glaselements (1), vorzugsweise eines scheibenförmigen Glaselements (1) nach einem der Ansprüche 1 bis 7, umfassend die Schritte:

- Bereitstellen eines scheibenförmigen Glassubstrats (10) mit zwei Seitenflächen (101, 102) und einer umlaufenden Kantenfläche (103), vorzugsweise gebildet aus oder umfassend Kalk-Natron-Glas,
- Aufbringen einer ersten Nassschicht, vorzugsweise mittels eines Druckverfahrens, bevorzugt mittels Siebdruck, auf eine erste Seitenfläche (101) des Glassubstrats (10),
- Erwärmen des mit einer ersten Nassschicht versehenen Glassubstrats (10) in einem Ofen, sodass eine Beschichtung (21) erhalten wird, wobei das Glassubstrat bevorzugt auf der unbeschichteten zweiten Seitenfläche (102) aufliegt,
- Aufbringen einer zweiten Nassschicht, vorzugsweise mittels eines Druckverfahrens, bevorzugt mittels Siebdruck, auf eine zweite Seitenfläche (102) des Glassubstrats (10),
- Erwärmen des mit der zweiten Nassschicht versehenen Glassubstrats (10) in einem Ofen, wobei das Glassubstrat (10) während des Erwärmens so in dem Ofen platziert wird, dass es auf der Beschichtung (21) liegt, sodass eine zweite Beschichtung (22) erhalten wird, sodass ein scheibenförmiges Glaselement (1) erhalten wird umfassend wenigstens zwei mittels Erwärmen aufgebrachte Beschichtungen (21, 22), vorzugsweise Emaille-Beschichtungen, welche auf den unterschiedlichen Seitenflächen (101, 102) des scheibenförmigen Glassubstrats (10) angeordnet sind, und wobei wenigstens eine Beschichtung (21) wenigstens einen Füllstoff umfassend temperaturstabile Partikel (3) mit einer durchschnittlichen Partikelgröße, vorzugsweise angegeben als $d_{50}$, umfasst und eine Schichtdicke (d) hat, wobei das Verhältnis (V) von der durchschnittlichen Partikelgröße (P) zur Schichtdicke (d)

$$V = \frac{P}{d}$$

höchstens 1 und wenigstens 0,01 beträgt.

9. Verfahren nach Anspruch 8, aufweisend wenigstens eines der folgenden Merkmale:

- das scheibenförmige Glassubstrat (10) ist aus Kalk-Natron-Glas ausgebildet und das Erwärmen wenigstens einer Nassschicht unter Erhalt einer Beschichtung (21, 22) erfolgt während eines thermischen Vorspannvorgangs;
- das Aufbringen wenigstens einer Nassschicht, vorzugsweise von beiden Nassschichten, erfolgt mittels Siebdruck, wobei ein Sieb mit einer Maschenzahl von wenigstens 70 und nächstens 150 verwendet wird;
- während wenigstens eines Erwärmens, vorzugsweise während beider Erwärmungsvorgänge, liegt das scheibenförmige Glassubstrat (10) auf einer Unterlagsplatte, welche vorzugsweise ein $SiO_2$-hatiges Material umfasst oder aus diesem besteht.

10. Scheibenförmiges Glaselement (1), insbesondere scheibenförmiges Glaselement (1) nach einem der Ansprüche 1 bis 7, hergestellt oder herstellbar in einem Verfahren nach einem der Ansprüche 8 oder 9.

11. Hausgerät, beispielsweise Backofen und/oder Kamin und/oder Herd, umfassend ein scheibenförmiges Glaselement (1) nach einem der Ansprüche 1 bis 7 und/oder 10.

12. Verwendung eines scheibenförmigen Glaselements (1) nach einem der Ansprüche 1 bis 7 oder 10 als Sichtscheibe und/oder Bedienblende, beispielsweise in einem Hausgerät, wie einem Backofen und/oder einem Kamin und/oder einem Herd, oder als Bestandteil in einem Sicherheitsglaslaminat, und/oder als Kochfläche und/oder als Frontscheibe in einem Möbel und/oder einem elektrischen Gerät und/oder als Scheibenelement in der Innen- und/oder Außenarchitektur.

Fig. 1

Fig. 2

EP 4 613 720 A1

Fig. 3

EP 4 613 720 A1

Fig. 4

Fig. 5

Fig. 6

Europäisches
Patentamt

European
Patent Office

Office européen
des brevets

## EUROPÄISCHER RECHERCHENBERICHT

**Nummer der Anmeldung**

EP 25 15 7887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/354264 A1 (MENKE-BERG YVONNE [DE] ET AL) 12. November 2020 (2020-11-12) * Absätze [0018] - [0019], [0028] - [0029], [0061] - [0064], [0087] - [0089], [0147]; Ansprüche 1,6; Tabellen 1,3 * | 1-12 | INV. C03C17/00 C03C17/04 |
| X | US 2022/135467 A1 (MENKE-BERG YVONNE [DE] ET AL) 5. Mai 2022 (2022-05-05) * Absätze [0056], [0077] - [0085], [0124] - [0125], [0134] - [0138], [0137] * | 1-12 | |
| X | US 2022/073420 A1 (KRECHEL RICARDA [DE] ET AL) 10. März 2022 (2022-03-10) * Absätze [0011], [0017] - [0019], [0082] - [0085], [0115] - [0116] * | 1-12 | |
| X | US 2017/113965 A1 (SIEBERS FRIEDRICH [DE] ET AL) 27. April 2017 (2017-04-27) * Absätze [0013], [0014], [0032] - [0041], [0047], [0072] * | 1-12 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| München | 22. Juli 2025 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 4 613 720 A1

**ANHANG ZUM EUROPÄISCHEN RECHERCHENBERICHT
ÜBER DIE EUROPÄISCHE PATENTANMELDUNG NR.** EP 25 15 7887

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2025

| Im Recherchenbericht angeführtes Patentdokument | Datum der Veröffentlichung | Mitglied(er) der Patentfamilie | Datum der Veröffentlichung |
|---|---|---|---|
| US 2020354264 A1 | 12-11-2020 | BR 112020010277 A2 | 13-10-2020 |
| | | BR 112020010342 A2 | 10-11-2020 |
| | | CN 111587231 A | 25-08-2020 |
| | | CN 111670171 A | 15-09-2020 |
| | | DE 102017127624 A1 | 23-05-2019 |
| | | EP 3713888 A1 | 30-09-2020 |
| | | EP 3713889 A1 | 30-09-2020 |
| | | US 2020283333 A1 | 10-09-2020 |
| | | US 2020354264 A1 | 12-11-2020 |
| | | US 2023035460 A1 | 02-02-2023 |
| | | WO 2019101873 A1 | 31-05-2019 |
| | | WO 2019101878 A1 | 31-05-2019 |
| | | WO 2019101880 A1 | 31-05-2019 |
| US 2022135467 A1 | 05-05-2022 | BR 102021022289 A2 | 17-05-2022 |
| | | CN 114436541 A | 06-05-2022 |
| | | DE 102020129161 A1 | 05-05-2022 |
| | | EP 3995462 A1 | 11-05-2022 |
| | | US 2022135467 A1 | 05-05-2022 |
| US 2022073420 A1 | 10-03-2022 | BR 102021017658 A2 | 22-03-2022 |
| | | CN 114149183 A | 08-03-2022 |
| | | DE 102020123403 A1 | 10-03-2022 |
| | | EP 3971146 A1 | 23-03-2022 |
| | | US 2022073420 A1 | 10-03-2022 |
| US 2017113965 A1 | 27-04-2017 | BR 112017000799 A2 | 03-07-2018 |
| | | CN 106536441 A | 22-03-2017 |
| | | EP 3169638 A1 | 24-05-2017 |
| | | ES 2724674 T3 | 13-09-2019 |
| | | KR 20170032331 A | 22-03-2017 |
| | | MX 381170 B | 12-03-2025 |
| | | PL 3169638 T3 | 31-07-2019 |
| | | US 2017113965 A1 | 27-04-2017 |
| | | US 2020189968 A1 | 18-06-2020 |
| | | WO 2016008752 A1 | 21-01-2016 |

EPO FORM P0461

Für nähere Einzelheiten zu diesem Anhang : siehe Amtsblatt des Europäischen Patentamts, Nr.12/82

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3169638 B1